# EUROPEAN PATENT APPLICATION

(11) **EP 4 444 023 A1**
(43) Date of publication of application: **09.10.2024**
(21) Application number: 24160655.7
(22) Date of filing: 29.02.2024
(51) Int. Cl.: H04W 76/14, H04W 40/22, H04W 68/02, H04W 88/04, H04W 92/18, H04W 48/10

(54) **COMMUNICATION WITH RELAY USER EQUIPMENT**

(30) Priority: 06.04.2023 FI 20235404
(71) Applicant: Nokia Technologies Oy, 02610 Espoo (FI)
(72) Inventor: VAN PHAN, Vinh, 90100 Oulu (FI); YU, Ling, 02700 Kauniainen (FI); SABOURI-SICHAN, Faranaz, 9220 Aalborg (DK); KOUSARIDAS, Apostolos, 80992 Munich (DE); MARANDI, Sayed Ali, 9000 Aalborg (DK)
(74) Representative: Bryers Intellectual Property Ltd

(57) **Abstract**

Disclosed is a method comprising transmitting, by an apparatus, a first data packet to at least one of a plurality of user-equipment-to-user-equipment, U2U, relay user equipments, wherein the first data packet comprises at least one of: a system information block, a paging message, an acknowledgement for a small data transmission, a connection setup response, a connection release response, or path information comprising information associated with the apparatus.

## Description

### FIELD

The following example embodiments relate to wireless communication.

### BACKGROUND

In case a remote user equipment is not in direct coverage of a network, it may still communicate with the network via a chain of relay user equipments. However, the relay user equipments may also need to be reachable by the network. Thus, there is a challenge in how to avoid the impact on the relay chain, while keeping the relay user equipments reachable by the network.

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to: transmit a first data packet to at least one of a plurality of user-equipment-to-user-equipment, U2U, relay user equipments; wherein the first data packet comprises at least one of: a system information block, a paging message, an acknowledgement for a small data transmission, a connection setup response, a connection release response, or path information comprising information associated with the apparatus.

According to another aspect, there is provided an apparatus comprising: means for transmitting a first data packet to at least one of a plurality of user-equipment-to-user-equipment, U2U, relay user equipments; wherein the first data packet comprises at least one of: a system information block, a paging message, an acknowledgement for a small data transmission, a connection setup response, a connection release response, or path information comprising information associated with the apparatus.

According to another aspect, there is provided a method comprising: transmitting, by an apparatus, a first data packet to at least one of a plurality of user-equipment-to-user-equipment, U2U, relay user equipments; wherein the first data packet comprises at least one of: a system information block, a paging message, an acknowledgement for a small data transmission, a connection setup response, a connection release response, or path information comprising information associated with the apparatus.

According to another aspect, there is provided a computer program comprising instructions which, when executed by an apparatus, cause the apparatus to perform at least the following: transmitting a first data packet to at least one of a plurality of user-equipment-to-user-equipment, U2U, relay user equipments; wherein the first data packet comprises at least one of: a system information block, a paging message, an acknowledgement for a small data transmission, a connection setup response, a connection release response, or path information comprising information associated with the apparatus.

According to another aspect, there is provided a computer readable medium comprising program instructions which, when executed by an apparatus, cause the apparatus to perform at least the following: transmitting a first data packet to at least one of a plurality of user-equipment-to-user-equipment, U2U, relay user equipments; wherein the first data packet comprises at least one of: a system information block, a paging message, an acknowledgement for a small data transmission, a connection setup response, a connection release response, or path information comprising information associated with the apparatus.

According to another aspect, there is provided a non-transitory computer readable medium comprising program instructions which, when executed by an apparatus, cause the apparatus to perform at least the following: transmitting a first data packet to at least one of a plurality of user-equipment-to-user-equipment, U2U, relay user equipments; wherein the first data packet comprises at least one of: a system information block, a paging message, an acknowledgement for a small data transmission, a connection setup response, a connection release response, or path information comprising information associated with the apparatus.

According to another aspect, there is provided an apparatus comprising at least one processor, and at least one memory storing instructions that, when executed by the at least one processor, cause the apparatus at least to: receive a first data packet from a user-equipment-to-network, U2N user equipment or a user-equipment-to-user-equipment, U2U, relay user equipment of a plurality of U2U relay user equipments, the plurality of U2U relay user equipments comprising the apparatus and one or more other U2U relay user equipments; wherein the first data packet comprises at least one of: a system information block, a paging message, an acknowledgement for a small data transmission, a connection setup response, a connection release response, or path information comprising information associated with at least one of: the U2N user equipment or the U2U relay user equipment.

According to another aspect, there is provided an apparatus comprising: means for receiving a first data packet from a user-equipment-to-network, U2N user equipment or a user-equipment-to-user-equipment, U2U, relay user equipment of a plurality of U2U relay user equipments, the plurality of U2U relay user equipments comprising the apparatus and one or more other U2U relay user equipments; wherein the first data packet comprises at least one of: a system information block, a paging message, an acknowledgement for a small data transmission, a connection setup response, a connection release response, or path information comprising information associated with at least one of: the U2N user equipment or the U2U relay user equipment.

According to another aspect, there is provided a method comprising: receiving, by an apparatus, a first data packet from a user-equipment-to-network, U2N user equipment or a user-equipment-to-user-equipment, U2U, relay user equipment of a plurality of U2U relay user equipments, the plurality of U2U relay user equipments comprising the apparatus and one or more other U2U relay user equipments; wherein the first data packet comprises at least one of: a system information block, a paging message, an acknowledgement for a small data transmission, a connection setup response, a connection release response, or path information comprising information associated with at least one of: the U2N user equipment or the U2U relay user equipment.

According to another aspect, there is provided a computer program comprising instructions which, when executed by an apparatus, cause the apparatus to perform at least the following: receiving a first data packet from a user-equipment-to-network, U2N user equipment or a user-equipment-to-user-equipment, U2U, relay user equipment of a plurality of U2U relay user equipments, the plurality of U2U relay user equipments comprising the apparatus and one or more other U2U relay user equipments; wherein the first data packet comprises at least one of: a system information block, a paging message, an acknowledgement for a small data transmission, a connection setup response, a connection release response, or path information comprising information associated with at least one of: the U2N user equipment or the U2U relay user equipment.

According to another aspect, there is provided a computer readable medium comprising program instructions which, when executed by an apparatus, cause the apparatus to perform at least the following: receiving a first data packet from a user-equipment-to-network, U2N user equipment or a user-equipment-to-user-equipment, U2U, relay user equipment of a plurality of U2U relay user equipments, the plurality of U2U relay user equipments comprising the apparatus and one or more other U2U relay user equipments; wherein the first data packet comprises at least one of: a system information block, a paging message, an acknowledgement for a small data transmission, a connection setup response, a connection release response, or path information comprising information associated with at least one of: the U2N user equipment or the U2U relay user equipment.

According to another aspect, there is provided a non-transitory computer readable medium comprising program instructions which, when executed by an apparatus, cause the apparatus to perform at least the following: receiving a first data packet from a user-equipment-to-network, U2N user equipment or a user-equipment-to-user-equipment, U2U, relay user equipment of a plurality of U2U relay user equipments, the plurality of U2U relay user equipments comprising the apparatus and one or more other U2U relay user equipments; wherein the first data packet comprises at least one of: a system information block, a paging message, an acknowledgement for a small data transmission, a connection setup response, a connection release response, or path information comprising information associated with at least one of: the U2N user equipment or the U2U relay user equipment.

According to an aspect, there is provided an apparatus comprising at least one processor, and at least one memory storing instructions that, when executed by the at least one processor, cause the apparatus at least to: determine a configuration for a common connection to be used across at least a user-equipment-to-network, U2N, relay user equipment and a plurality of user-equipment-to-user-equipment, U2U, relay user equipments, wherein the plurality of U2U relay user equipments are configured to provide a multi-hop connection between the U2N relay user equipment and a remote user equipment via the plurality of U2U relay user equipments; and transmit the configuration to the U2N relay user equipment, wherein the common connection includes at least one of: a control channel, a common control channel, a pre-defined control channel, a common bearer, a common signaling radio bearer, or a pre-defined signaling radio bearer.

According to another aspect, there is provided an apparatus comprising: means for determining a configuration for a common connection to be used across at least a user-equipment-to-network, U2N, relay user equipment and a plurality of user-equipment-to-user-equipment, U2U, relay user equipments, wherein the plurality of U2U relay user equipments are configured to provide a multi-hop connection between the U2N relay user equipment and a remote user equipment via the plurality of U2U relay user equipments; and means for transmitting the configuration to the U2N relay user equipment, wherein the common connection includes at least one of: a control channel, a common control channel, a pre-defined control channel, a common bearer, a common signaling radio bearer, or a pre-defined signaling radio bearer.

According to another aspect, there is provided a method comprising: determining a configuration for a common connection to be used across at least a user-equipment-to-network, U2N, relay user equipment and a plurality of user-equipment-to-user-equipment, U2U, relay user equipments, wherein the plurality of U2U relay user equipments are configured to provide a multi-hop connection between the U2N relay user equipment and a remote user equipment via the plurality of U2U relay user equipments; and transmitting the configuration to the U2N relay user equipment, wherein the common connection includes at least one of: a control channel, a common control channel, a pre-defined control channel, a common bearer, a common signaling radio bearer, or a pre-defined signaling radio bearer.

According to another aspect, there is provided a computer program comprising instructions which, when executed by an apparatus, cause the apparatus to perform at least the following: determining a configuration for a common connection to be used across at least a user-equipment-to-network, U2N, relay user equipment and a plurality of user-equipment-to-user-equipment, U2U, relay user equipments, wherein the plurality of U2U relay user equipments are configured to provide a multi-hop connection between the U2N relay user equipment and a remote user equipment via the plurality of U2U relay user equipments; and transmitting the configuration to the U2N relay user equipment, wherein the common connection includes at least one of: a control channel, a common control channel, a pre-defined control channel, a common bearer, a common signaling radio bearer, or a pre-defined signaling radio bearer.

According to another aspect, there is provided a computer readable medium comprising program instructions which, when executed by an apparatus, cause the apparatus to perform at least the following: determining a configuration for a common connection to be used across at least a user-equipment-to-network, U2N, relay user equipment and a plurality of user-equipment-to-user-equipment, U2U, relay user equipments, wherein the plurality of U2U relay user equipments are configured to provide a multi-hop connection between the U2N relay user equipment and a remote user equipment via the plurality of U2U relay user equipments; and transmitting the configuration to the U2N relay user equipment, wherein the common connection includes at least one of: a control channel, a common control channel, a pre-defined control channel, a common bearer, a common signaling radio bearer, or a pre-defined signaling radio bearer.

According to another aspect, there is provided a non-transitory computer readable medium comprising program instructions which, when executed by an apparatus, cause the apparatus to perform at least the following: determining a configuration for a common connection to be used across at least a user-equipment-to-network, U2N, relay user equipment and a plurality of user-equipment-to-user-equipment, U2U, relay user equipments, wherein the plurality of U2U relay user equipments are configured to provide a multi-hop connection between the U2N relay user equipment and a remote user equipment via the plurality of U2U relay user equipments; and transmitting the configuration to the U2N relay user equipment, wherein the common connection includes at least one of: a control channel, a common control channel, a pre-defined control channel, a common bearer, a common signaling radio bearer, or a pre-defined signaling radio bearer.

### LIST OF DRAWINGS

In the following, various example embodiments will be described in greater detail with reference to the accompanying drawings, in which
FIG. 1A illustrates an example of a wireless communication network;
FIG. 1B illustrates an example of a system;
FIG. 1C illustrates an example of a system;
FIG. 1D illustrates an example of a system;
FIG. 2 illustrates a flow chart;
FIG. 3 illustrates a flow chart;
FIG. 4 illustrates a flow chart;
FIG. 5 illustrates a flow chart;
FIG. 6 illustrates a flow chart;
FIG. 7 illustrates a flow chart;
FIG. 8 illustrates a flow chart;
FIG. 9 illustrates a flow chart;
FIG. 10 illustrates a signal flow diagram;
FIG. 11 illustrates a signal flow diagram;
FIG. 12 illustrates a signal flow diagram;
FIG. 13 illustrates an example of an apparatus; and
FIG. 14 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication network comprising a radio access network based on one or more of the following radio access technologies: Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications.

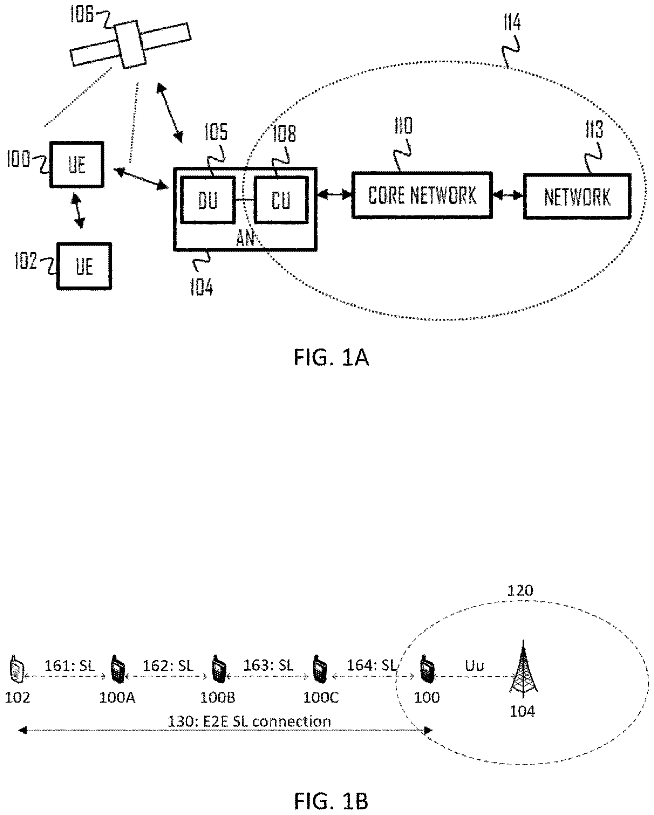

FIG. 1A depicts an example of a simplified wireless communication network showing some physical and logical entities. The connections shown in FIG. 1A may be physical connections or logical connections. It is apparent to a person skilled in the art that the wireless communication network may also comprise other physical and logical entities than those shown in FIG. 1A.

The example embodiments described herein are not, however, restricted to the wireless communication network given as an example but a person skilled in the art may apply the embodiments described herein to other wireless communication networks provided with necessary properties.

The example wireless communication network shown in FIG. 1A includes an access network, such as a radio access network (RAN), and a core network 110.

FIG. 1A shows user equipment (UE) 100, 102 configured to be in a wireless connection on one or more communication channels in a radio cell with an access node (AN) 104 of an access network. The AN 104 may be an evolved Node B (abbreviated as eNB or eNodeB) or a next generation Node B (abbreviated as gNB or gNodeB), providing the radio cell. The wireless connection (e.g., radio link) from a UE to the access node 104 may be called uplink (UL) or reverse link, and the wireless connection (e.g., radio link) from the access node to the UE may be called downlink (DL) or forward link. UE 100 may also communicate directly with UE 102, and vice versa, via a wireless connection generally referred to as a sidelink (SL). It should be appreciated that the access node 104 or its functionalities may be implemented by using any node, host, server or access point etc. entity suitable for providing such functionalities.

The access network may comprise more than one access node, in which case the access nodes may also be configured to communicate with one another over links, wired or wireless. These links between access nodes may be used for sending and receiving control plane signaling and also for routing data from one access node to another access node.

The access node may comprise a computing device configured to control the radio resources of the access node. The access node may also be referred to as a base station, a base transceiver station (BTS), an access point, a cell site, a radio access node or any other type of node capable of being in a wireless connection with a UE (e.g., UEs 100, 102). The access node may include or be coupled to transceivers. From the transceivers of the access node, a connection may be provided to an antenna unit that establishes bi-directional radio links to UEs 100, 102. The antenna unit may comprise an antenna or antenna element, or a plurality of antennas or antenna elements.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and a mobility management entity (MME). The 5GC may comprise network functions, such as a user plane function (UPF), an access and mobility management function (AMF), and a location management function (LMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device just to mention but a few names. The UE may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or any computing device comprising a wireless modem integrated in a vehicle.

Any feature described herein with a UE may also be implemented with a corresponding apparatus, such as a relay node. For example, the UE 102 may communicate with the access node 104 via one or more relay UEs 100.

The wireless communication network may also be able to support the usage of cloud services, for example at least part of core network operations may be carried out as a cloud service (this is depicted in FIG. 1A by "cloud" 114). The communication system may also comprise a central control entity, or the like, providing facilities for wireless communication networks of different operators to cooperate for example in spectrum sharing.

5G enables using multiple input - multiple output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine type applications, such as (massive) machine-type communications (mMTC), including vehicular safety, different sensors and real-time control.

In 5G wireless communication networks, access nodes and/or UEs may have multiple radio interfaces, namely below 6GHz, cmWave and mmWave, and also being integrable with existing legacy radio access technologies, such as the LTE. Integration with the LTE may be implemented, for example, as a system, where macro coverage may be provided by the LTE, and 5G radio interface access may come from small cells by aggregation to the LTE. In other words, a 5G wireless communication network may support both inter-RAT operability (such as LTE-5G) and inter-RI operability (inter-radio interface operability, such as below 6GHz - cmWave - mmWave). One of the concepts considered to be used in 5G wireless communication networks may be network slicing, in which multiple independent and dedicated virtual sub-networks (network instances) may be created within the substantially same infrastructure to run services that have different requirements on latency, reliability, throughput and mobility.

In some example embodiments, an access node (e.g., access node 104) may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node. The DU 105 may be a logical node hosting radio link control (RLC), medium access control (MAC) and/or physical (PHY) layers of the NR protocol stack for the access node. The operations of the DU may be at least partly controlled by the CU. It should also be understood that the distribution of functions between DU 105 and CU 108 may vary depending on implementation. The CU may comprise a control plane (CU-CP), which may be a logical node hosting the RRC and the control plane part of the PDCP protocol of the NR protocol stack for the access node. The CU may further comprise a user plane (CU-UP), which may be a logical node hosting the user plane part of the PDCP protocol and the SDAP protocol of the CU for the access node.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the access network (e.g., RAN) by utilizing network function virtualization (NFV) and software defined networking (SDN). Using edge cloud may mean access node operations to be carried out, at least partly, in a computing system operationally coupled to a remote radio head (RRH) or a radio unit (RU) of an access node. It is also possible that access node operations may be performed on a distributed computing system or a cloud computing system located at the access node. Application of cloud RAN architecture enables RAN real-time functions being carried out at the access network (e.g., in a DU 105) and non-real-time functions being carried out in a centralized manner (e.g., in a CU 108).

It should also be understood that the distribution of functions between core network operations and access node operations may differ in future wireless communication networks compared to that of the LTE or 5G, or even be non-existent. Some other technology advancements that may be used include big data and all-IP, which may change the way wireless communication networks are being constructed and managed. 5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network, enabling more extensive network coverage. Possible use cases may be providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). A given satellite 106 in the mega-constellation may cover several satellite-enabled network entities that create on-ground cells. The on-ground cells may be created through an on-ground relay access node or by an access node 104 located on-ground or in a satellite.

It is obvious for a person skilled in the art that the access node 104 depicted in FIG. 1A is just an example of a part of an access network (e.g., a radio access network) and in practice, the access network may comprise a plurality of access nodes, the UEs 100, 102 may have access to a plurality of radio cells, and the access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of an access network (e.g., a radio access network), a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) of FIG. 1A may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of access networks, the concept of "plug-and-play" access nodes may be introduced. An access network which may be able to use "plug-and-play" access nodes, may include, in addition to Home eNodeBs or Home gNodeBs, a Home Node B gateway, or HNB-GW (not shown in FIG. 1A). An HNB-GW, which may be installed within an operator's access network, may aggregate traffic from a large number of Home eNodeBs or Home gNodeBs back to a core network of the operator.

Some example embodiments are described below using principles and terminology of 5G NR radio access technology without limiting the example embodiments to 5G NR radio access technology, however.

FIG. 1B illustrates an example of a system. FIG. 1B may be understood to depict a part of the wireless communication network of FIG. 1A, but with greater accuracy with respect to a multi-hop relay scenario.

FIG. 1B illustrates a sidelink-based L2 multi-hop user-equipment-to-network (U2N) relay connection for a remote UE 102 via a U2N relay UE 100 to a an access node 104 (e.g., serving gNB), wherein the sidelink-based connection between the remote UE 102 and the U2N relay UE 100 is provided via a plurality of user-equipment-to-user-equipment (U2U) relay UEs 100A, 100B, 100C.

A given relay UE 100, 100A, 100B, 100C may establish unicast sidelink connections 161, 162, 163, 164 with its neighboring UE(s) for respective hops of the multi-hop relay connection 130 between the remote UE 102 and the U2N relay UE 100. In other words, a given unicast SL connection 161, 162, 163, 164 provides one hop of the multi-hop relay connection 130. Thus, the multi-hop relay connection 130 provides an end-to-end (E2E) sidelink connection between the remote UE 102 and the U2N relay UE 100.

The remote UE 102 may be defined as a UE that communicates with the network (e.g., the access node 104) via relay UEs 100, 100A, 100B, 100C. In a multi-hop relay chain, the remote UE 102 does not directly communicate with the access node 104. Instead, the remote UE 102 communicates with the access node 104 via the relay UEs 100, 100A, 100B, 100C in the multi-hop relay chain. For example, the remote UE 102 may be located farther away from the access node 104 than the relay UEs, beyond the direct communication range of the access node 104, and thus the remote UE 102 relies on the relay UEs 100, 100A, 100B, 100C to relay its data to and from the access node 104.

The U2N relay UE 100 may be defined as a UE that provides functionality to support connectivity to the network (e.g., the access node 104) for one or more remote UEs 102. The U2N relay UE 100 may be in coverage 120 of the access node 104. The access node 104 may also be referred to as a radio access network node herein.

A U2U relay UE 100A, 100B, 100C may be defined as a UE that provides functionality to support connectivity between two other UEs. For example, the U2U relay UE 100A, 100B, 100C may receive data from one UE and forward it to another UE, thereby extending the coverage of the network 104 and improving the reliability of communication in areas with poor coverage or high interference. A given U2U relay 100A, 100B, 100C may be based on an L2 or L3 solution.

Although three U2U relay UEs 100A, 100B, 100C are shown in FIG. 1B, it should be noted that the number of U2U relay UEs may also be different than three. In other words, there may be two or more U2U relay UEs between the remote UE 102 and the U2N relay UE 100.

In a multi-hop U2N relay (e.g., as shown in FIG. 1B), only the U2N relay UE 100 needs to be in direct Uu coverage 120 of the serving network 104 (represented by a single RAN node in the example of FIG. 1B). This may be referred to as an in-coverage (IC) status.

The other UEs, including the remote UE 102 and the U2U relay UEs 100A, 100B, 100C, may be outside the direct Uu coverage 120 of the serving network 104, which may be referred to as an out-of-coverage (OoC) status.

For an L2 multi-hop U2N relay, after the L2 multi-hop U2N relay connection is set up for the remote UE 102, at least the remote UE 102 and the serving U2N relay UE 100 may be in RRC_CONNECTED state of the serving network 104 (e.g., serving gNB).

The rest of the UEs, including at least one U2U relay UE 100A, 100B, 100C, may be in any state of their serving network(s). For example, a given U2U relay UE 100A, 100B, 100C may be in RRC_IDLE or RRC_INACTIVE or RRC_CONNECTED state towards the same or different serving gNB(s) of the same or different serving network(s), compared to that of the remote UE 102 and the U2N relay UE 100. Alternatively, a given U2U relay UE 100A, 100B, 100C may remain in OoC status and in DETACHED state.

However, in order to be reachable and paged for an incoming call by the serving network, the individual U2U relay UE 100A, 100B, 100C may need to be kept in at least RRC_IDLE or RRC_INACTIVE state of its serving network, while serving the L2 multi-hop U2N relay connection of the remote UE 102. The multi-hop U2N relay connection may also be referred to as a relay chain.

In other words, the individual U2U relay UE 100A, 100B, 100C may need to be treated also as a regular remote UE by the serving network. In this case, if the individual U2U relay UE 100A, 100B, 100C is initially in OoC status and in DETACHED state, it may need to select an L2 U2N relay UE to connect to the serving network and perform the network registration procedure to transition from DETACHED to IDLE or INACTIVE state via CONNECTED state.

Then, IDLE or INACTIVE UE mobility procedures for the individual U2U relay UE 100A, 100B, 100C in IDLE or INACTIVE state may need to be performed from time to time via the selected L2 U2N relay UE, while serving the L2 multi-hop U2N relay connection of the remote UE 102. For example, the mobility procedures may include at least one of: paging monitoring, system information block (SIB) reception, tracking area update (TAU), RAN based notification area update (RNAU), radio resource management (RRM) measurements, and/or cell reselection.

Furthermore, the individual U2U relay UE 100A, 100B, 100C, while serving the L2 multi-hop U2N relay connection of the remote UE 102, may have a need for small data transmission (SDT), or getting CONNECTED to the serving network for paging response and regular data transmission.

Hence, the first problem is that when U2U relay UEs 100A, 100B, 100C are in the relay chain, they still need to be reachable by the serving network considering their normal UE role. Thus, there is a challenge in how to avoid the impacts to the relay chain, while keeping U2U relay UEs reachable by the serving network.

The assumption is that any sidelink UE, which is or becomes OoC, may initiate sidelink U2N relay discovery and (re)selection to find a path to reach the network independently. However, if such UE is already involved in a multi-hop L2 U2N relay path, serving as a U2U relay in the relay chain, it may be able to bypass the U2N relay discovery and (re)selection procedure by utilizing the already established relay chain for another remote UE toward the access node, when the U2U relay UE also needs to act as a remote UE for its own operation. This may be conditioned such that the U2U relay UE is authorized to access the serving gNB of the L2 U2N relay UE.

Referring to FIG. 1B, any of the U2U relay UEs 100A, 100B, 100C may use the existing path toward the RAN node 104 (e.g., gNB) for its own operation as a remote UE, after determining that it is authorized to access the serving RAN node 104 of the L2 U2N relay UE 100. It is noted that RAN sharing is supported with L2 U2N relay. This means that the remote UE 102 and the L2 U2N relay UE 100 may not have to be subscribers of the same authorized public land mobile network (PLMN). This may also be applied for U2U relay UEs 100A, 100B, 100C as well.

Hence, the second problem is that the protocol overhead associated with the first problem may be proportionally scaled up with the number of U2U relay UEs. The question then is how to enable and facilitate such utilization of an existing L2 multi-hop U2N relay connection of the remote UE 102 via the U2N relay UE 100 for the individual serving U2U relay UEs 100A, 100B, 100C (which may also be acting as remote UEs while serving the L2 multi-hop U2N relay connection of the remote UE 102) to reduce the protocol overhead.

Some example embodiments may address the above problems by providing a method to enable and facilitate efficient utilization of an existing L2 multi-hop U2N relay connection of a remote UE 102 to a serving network 104 via an L2 U2N relay UE 100, or at least the existing E2E SL connection 130 between the remote UE 102 and the L2 U2N relay UE 100, by a U2U relay UE 100A, 100B, 100C, which is part of the relay chain serving the existing connection 130 of the remote UE 102.

The utilization may be aimed for at least: providing certain IDLE or INACTIVE UE mobility functions or procedures, such as SIB and paging deliveries for the U2U relay UEs of the relay chain that are authorized to access the serving gNB of the L2 U2N relay UE; as well as updating path information among the involved UEs of the relay chain.

The example embodiments described below may allow bypassing the U2N relay discovery and (re)selection procedure. This may be beneficial in terms of reducing protocol overhead and resource consumption.

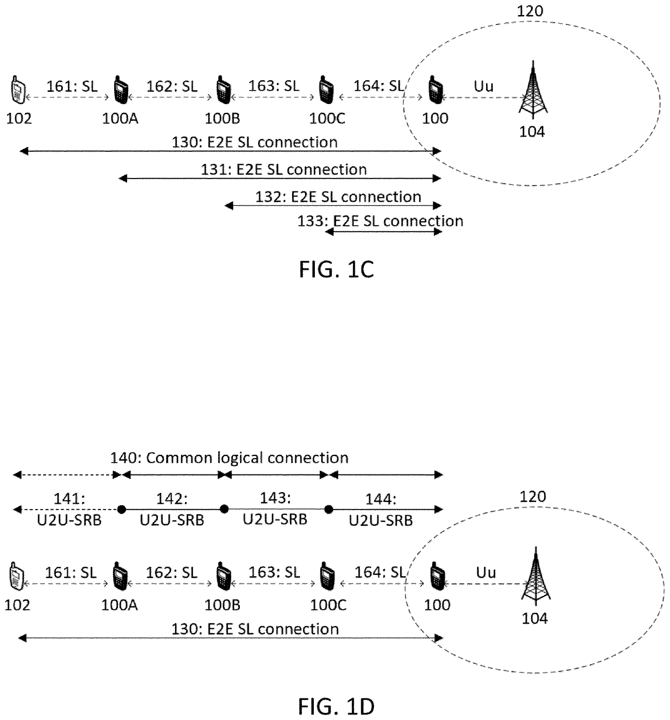

FIG. 1C illustrates an example of a system according to an example embodiment, wherein end-to-end sidelink connections 131, 132, 133 are established between individual U2U relay UEs 100A, 100B, 100C and the U2N relay UE 100. FIG. 1C may be understood to depict a part of the wireless communication network of FIG. 1A, but with greater accuracy with respect to a multi-hop relay scenario.

Although three U2U relay UEs 100A, 100B, 100C are shown in FIG. 1C, it should be noted that the number of U2U relay UEs may also be different than three. In other words, there may be two or more U2U relay UEs.

Referring to FIG. 1C, in case an individual U2U relay UE 100A, 100B, 100C of the multi-hop relay chain has a need to get into CONNECTED state of the serving network 104 (e.g., RAN node) via the L2 U2N relay UE 100, the individual U2U relay UE 100A, 100B, 100C may set up and maintain a unicast E2E SL connection 131, 132, 133 with the L2 U2N relay UE 100 for the needed U2N relay.

In the example of FIG. 1C, there may be a first E2E SL connection 130 between the remote UE 102 and the U2N relay UE 100 via three U2U relay UEs 100A, 100B, 100C. Furthermore, there may be a second E2E SL connection 131 between the first U2U relay UE 100A and the U2N relay UE 100 via the second U2U relay UE 100B and the third U2U relay UE 100C. Furthermore, there may be a third E2E SL connection 132 between the second U2U relay UE 100B and the U2N relay UE 100 via the third U2U relay UE 100C. Furthermore, there may be a fourth E2E SL connection 133 between the third U2U relay UE 100C and the U2N relay UE 100.

However, there may be some drawbacks associated with using the individual E2E SL connections 131, 132, 133 for the assistance or services that the U2N relay UE 100 may provide to the individual U2U relay UEs 100A, 100B, 100C of the relay chain that are also operating as remote UEs in IDLE or INACTIVE state.

Firstly, the use of an individual E2E SL U2U relay connection 131, 132, 133 for each of the U2U relay UEs 100A, 100B, 100C with the U2N relay UE 100 means notable signaling overhead for setting up and maintaining the individual E2E SL connections 131, 132, 133 scaled up with the number of U2U relay UEs 100A, 100B, 100C.

Secondly, the U2N relay UE 100 may have to send the same information, such as SIB update or path update, to each of the U2U relay UEs 100A, 100B, 100C individually over their E2E SL connections 131, 132, 133, instead of flooding the information to all the U2U relay UEs 131, 132, 133 over a single connection.

To address the above drawbacks, in case the individual U2U relay UE 100A, 100B, 100C remains in IDLE or INACTIVE state, the individual U2U relay UE 100A, 100B, 100C and the U2N relay UE 100 may communicate with each other over a common U2U relay logical connection (or logical communication channel) utilizing the multi-hop relay chain, as described below and shown in FIG. 1D.

FIG. 1D illustrates an example of a system according to an example embodiment with a common U2U relay logical connection 140. FIG. 1D may be understood to depict a part of the wireless communication network of FIG. 1A, but with greater accuracy with respect to a multi-hop relay scenario.

Although three U2U relay UEs 100A, 100B, 100C are shown in FIG. 1D, it should be noted that the number of U2U relay UEs may also be different than three. In other words, there may be two or more U2U relay UEs.

After completion of the setup of the L2 multi-hop U2N relay connection between the remote UE 102 and the serving network 104 (e.g., RAN node) via the L2 U2N relay UE 100, or at least the E2E SL connection 130 between the remote UE 102 and the L2 U2N relay UE 100, the following information may be communicated to all the involved UEs 100, 100A, 100B, 100C, 102 in the relay chain: identifiers (IDs) of the remote UE 102 and the U2N relay UE 100 and their serving cell and network(s) (considering RAN sharing support); the number of hops between the remote UE 102 and the U2N relay UE 100; the number of hops between the first U2U relay UE 100A and the L2 U2N relay UE 100; and so forth (including L2 ID(s) and/or other exposable or discoverable proximity service ID(s) of the individual U2U relay UEs 100A, 100B, 100C, the remote UE 102, and/or the U2N relay UE 100, IDs of the serving cell(s) and network(s) of the U2U relay UEs 100A, 100B, 100C). This information may be considered as a part of the path information, which may be updated and maintained across the involved UEs 100, 100A, 100B, 100C, 102.

It is noted that different L2 IDs and thus different SL connections may be used by individual SL UEs for different SL communication purposes or roles such as: U2N relay or U2U relay; and remote role or relay role. For example, the L2 IDs that the remote UE 102 and the L2 U2N relay UE 100 use to communicate with one another for the L2 U2N relay may be different from the L2 IDs they use to communicate with the neighboring U2U relay UEs 100A, 100B, 100C in the relay chain.

In this regard, an individual U2U relay UE 100A, 100B, 100C of the relay chain, based on determining that it may be able to select the L2 U2N relay UE 100 for possible network access, may indicate the L2 ID that it uses for operating as a remote UE to the L2 U2N relay UE 100 and/or to other UEs in the relay chain during or after the setup of the E2E SL connection between the remote UE 102 and the U2N relay UE 100.

For example, the individual U2U relay UE 100A, 100B, 100C may indicate its L2 ID for operating as a remote UE in or along with the SL connection request that is initiated by the remote UE 102 and to be forwarded by the individual U2U relay UE 100A, 100B, 100C to the L2 U2N relay UE 100 during the setup of the E2E SL connection 130 between the remote UE 102 and the U2N relay UE 100.

The individual U2U relay UE 100A, 100B, 100C may also indicate its L2 ID for operating as a remote UE to other UEs in the relay chain using a path information update procedure, after the setup of the E2E SL connection 130 between the remote UE 102 and the U2N relay UE 100.

Referring to FIG. 1D, there may be a common U2U relay logical connection 140 (or logical communication channel) across at least all the U2U relay UEs 100A, 100B, 100C and the L2 U2N relay UE 100 serving the multi-hop relay connection of the remote UE 102. In other words, the remote UE 102 may be excluded from the common logical connection 140, as the remote UE 102 already has its own connection 130 with the U2N relay UE 100. Alternatively, the remote UE 102 may also be included in the common logical connection 140.

Whether or not the common logical connection 140 is extended to the remote UE 102 may depend on the RRC state of the remote UE 102 or the use of the common logical connection 140 including functions and services provided using the common logical connection 140. For example, the U2U relay UEs 100A, 100B, 100C and the remote UE 102 may use the common U2U relay logical connection 140, when being in RRC_IDLE or RRC_INACTIVE state of the serving network 104 (e.g., RAN node) of the U2N relay UE 100. As another example, if the remote UE 102 is in RRC_IDLE or RRC_INACTIVE or RRC_CONNECTED state, the common logical connection 140 may be used for communication or signalling between the remote UE 102 and at least one of the U2U relay UEs 100A, 100B, 100C serving its multi-hop relay connection 130. For example, the communication or signalling over the common logical connection 140 may include event notification or context information update from a U2U relay UE 100A, 100B, 100C to the remote UE 102, or request-response exchanges between them for relay reselection or path information update. In case the remote UE 102 is in RRC_CONNECTED state, it may also be provided with a separate common U2U relay logical connection.

The common U2U relay logical connection 140 may be based on, for example, an exclusive or pre-defined SL U2U relay signaling radio bearer (SRB) 141, 142, 143, 144, denoted as U2U-SRB. In this case, SL RRC may be used for terminating data transmission over the common U2U relay logical connection 140, and all the hops may be utilized right away without a need to perform a connection setup. In other words, a new SL U2U-SRB 141, 142, 143, 144 using a pre-defined U2U sidelink control channel, denoted as U2U-SCCH, may be provided for SL U2U transmission of SL RRC terminated control information or data (e.g., small data) between or among the UEs 100, 100A, 100B, 100C, 102 of the relay chain. The U2U-SRB 141, 142, 143, 144 and associated U2U-SCCH may be activated and used at the individual UEs of the relay chain once the individual UEs accept to be part of the relay chain and the unicast SL connections 161, 162, 163, 164 for respective hops of the individual UEs are set up, for example.

A sidelink control channel (e.g., the U2U-SCCH) is a logical channel used to carry information, such as signaling messages and control plane data, between the UEs in the relay chain. A sidelink signaling radio bearer (e.g., the U2U-SRB) is a bearer used to carry a signaling message and control plane data, and the sidelink signaling radio bearer is mapped to a logical connection established between two UEs for the purpose of transmitting the signaling messages and control plane data over the control channel. The sidelink signaling radio bearer is therefore transmitted using the corresponding sidelink control channel. In other words, the SRB may be used to carry the control plane traffic to be transmitted on the control channel between the UEs.

The common U2U relay logical connection 140 forms a kind of bus network in control-plane across at least the U2U relay UEs 100A, 100B, 100C and the L2 U2N relay UE 100 serving the multi-hop relay connection of the remote UE 102. In case the SL U2U-SRB 141, 142, 143, 144 is used for realizing the common U2U relay logical connection 140, the bus network is in principle an SL RRC based multi-hop U2U relay. In this case, L2 IDs of the individual U2U relay UEs 100A, 100B, 100C may be used in an SL RRC packet to address the E2E source (SRC) and destination (DST) IDs of the SL RRC packet sent on SL U2U-SRB 141, 142, 143, 144, bypassing the sidelink relay adaptation protocol (SRAP).

The E2E DST ID may be omitted in case the SL RRC packet over the common U2U relay logical connection 140 is meant for the L2 U2N relay UE 100 (e.g., a request message from an individual U2U relay UE 100A, 100B, 100C to the L2 U2N relay UE 100); and/or the L2 broadcast ID may be used as the E2E DST ID in case the SL RRC packet is meant for all the U2U relay UEs 100A, 100B, 100C (e.g., a path information update or an SIB update from the L2 U2N relay UE 100). The E2E SRC ID may be omitted in case the SL RRC packet over the common U2U relay logical connection 140 is originated from the L2 U2N relay UE 100. The L2 IDs that are used by the U2U relay UEs 100A, 100B, 100C for operating as remote UEs may be used as SRC and DST IDs in SL RRC packets using the U2U-SRB 141, 142, 143, 144. It is noted that an exclusive or pre-defined SL logical channel ID (LCID) may be reserved and used for identifying the U2U-SCCH used for sending and/or receiving data of the SL U2U-SRB 141, 142, 143, 144 on the SL medium access control (MAC) layer.

The common U2U relay logical connection 140 may be used by at least some of the U2U relay UEs 100A, 100B, 100C and the L2 U2N relay UE 100 to send a request, an information update, or an indication to any other U2U relay UE(s) 100A, 100B, 100C and the L2 U2N relay UE 100 serving the multi-hop relay connection of the remote UE 102. These requests, information updates, or indications may represent a set of SL RRC procedures using the U2U-SRB 141, 142, 143, 144 between or among the UEs of the relay chain, for example between the L2 U2N relay UE 100 and the U2U relay UEs 100A, 100B, 100C that are in IDLE or INACTIVE state.

For example, the request, information update or indication may comprise (but is not limited to) at least one of: SIB request to at least the L2 U2N relay UE 100; SIB update from at least the L2 U2N relay UE 100; paging assistance request to the L2 U2N relay UE 100; paging indication from the L2 U2N relay UE 100; U2U path information update from any UE involved in the common U2U relay logical connection 140; small data transmission (SDT) request from any U2U relay UE 100A, 100B, 100C to the L2 U2N relay UE 100; SDT acknowledgement from the L2 U2N relay UE 100 back to the sender; an L2 multi-hop relay connection setup or release request from any U2U relay UE 100A, 100B, 100C to the L2 U2N relay UE 100 as well as the upstream U2U relay UE(s); and/or an L2 multi-hop relay connection setup or release response from the L2 U2N relay UE 100 as well as the upstream U2U relay UE(s).

The common U2U relay logical connection 140 may be activated or deactivated at the U2N relay UE 100 and individual U2U relay UEs 100A, 100B, 100C, and, optionally, the remote UE 102, when the setup or release of the multi-hop relay connection 130 of the remote UE 102 is at least hop-by-hop completed.

The common U2U relay logical connection 140 may be a uni-directional or bi-directional communication channel. For example, in case the common U2U relay logical connection 140 is uni-directional, then the common U2U relay logical connection 140 may be used in only one direction, for example for forwarding SIB update, paging, or path information update from the U2N relay UE 100 to at least one of the U2U relay UEs 100A, 100B, 100C and/or to the remote UE 102.

The common U2U relay logical connection 140 may be under control of the U2N relay UE 100, or under control of the serving network 104 (e.g., RAN node) via the U2N relay UE 100. To realize this, requests or indications corresponding to the extension, activation, deactivation, or direction setting of the common U2U relay logical connection 140 may be sent along with, for example, an acceptance message of the multi-hop relay connection 130 of the remote UE 102, which may be initiated from the U2N relay UE 100 and forwarded in downstream to the last U2U relay UE 100A or to the remote UE 102 in case of the extension indication. The decision for this control may be based on, for example, the RRC state of at least the remote UE 102, number of hops or U2U relay UEs 100A, 100B, 100C in the multi-hop relay connection 130 of the remote UE 102, load at the U2N relay UE 100, the quality of service (QoS) of the multi-hop connection 130, congestion and/or radio measurements across the multi-hop path, and so forth.

A dedicated resource pool may be commonly configured to all capable SL UEs for SL communications over the common U2U relay logical connection 140. Alternatively, or additionally, resource pools configured for SL discovery and/or communication may be used for SL communications over the common U2U relay logical connection 140.

For example, if the control of the common U2U relay logical connection 140 is under the serving network 104 (e.g., RAN node) via the U2N relay UE 100, then the serving network 104 may provide dedicated resources and resource pools to ensure reliability of exchanged messages over the common U2U relay logical connection 140. In addition, security credentials may be provided to improve the security of the exchanged messages.

Upon activation of the common U2U relay logical connection 140 or determination of utilizing the activated common U2U relay logical connection 140 for serving an individual U2U relay UE 100A, 100B, 100C, the U2U relay UE 100A, 100B, 100C may register or indicate the enabling of the common U2U relay logical connection 140 service to the U2N relay UE 100 by sending a registration or indication SL RRC packet to the U2N relay UE 100 using the common U2U relay logical connection 140. In the registration or indication SL RRC packet, the L2 ID of the U2U relay UE 100A, 100B, 100C may be indicated to the U2N relay UE 100.

If the control of the common U2U relay logical connection 140 is under the serving network 104 (e.g., RAN node), then the serving network 104 may maintain information about the UEs involved in the common U2U relay logical connection 140. For example, this information may include one or more of the following: IDs of UEs, topology and connections of the involved UEs, supported services over the common U2U relay logical connection 140, etc.

As an example, the common U2U relay logical connection 140 may be used to support positioning and/or ranging requests from the U2N relay UE 100 towards the U2U relay UEs 100A, 100B, 100C and/or the remote UE 102. For example, the U2N relay UE 100 may receive the positioning and/or ranging requests from a function of the core network 110, such as an access and mobility management function (AMF) or a location management function (LMF). Alternatively, or additionally, the common U2U relay logical connection 140 may be used to support the provision of positioning and ranging outputs (e.g., calculated via sidelink-based positioning) from one or more U2U relay UEs 100A, 100B, 100C and/or from the remote UE 102 to the U2N relay UE 100.

The common U2U relay logical connection 140 may support a pre-configured set of services (e.g., SIB request, paging indication, etc) based on, for example, the capabilities of the involved UEs, availability of resources, radio conditions, etc. The addition of a supported service may be requested by any UE involved in the common U2U relay logical connection 140. The U2N relay UE 100 or the serving network 104 (e.g., RAN node), or any other entity that controls the common logical connection 140, may accept the addition of more services.

Use of the common U2U relay logical connection 140 may reduce overhead and latency, as the need for setting up and maintaining separate E2E unicast SL connections between the individual U2U relay UEs 100A, 100B, 100C (serving the same L2 multi-hop relay connection 130) and the U2N relay UE 100 is eliminated. The higher the number of individual U2U relay UEs 100A, 100B, 100C is, the larger the overhead reduction using the common U2U relay logical connection 140 is.

It should be noted that some example embodiments may also be applied in a multi-hop U2U relay in addition to the multi-hop U2N relay described above. In this case, the U2N relay UE 100 and the remote UE 102 may be seen as the end-UEs of the multi-hop U2U relay connection (i.e., there may be no RAN node 104 involved in the multi-hop U2U relay connection). In case of a multi-hop U2U relay connection, the end-UEs 100, 102 may also be referred to as a source end UE 102 and a target end UE 100 (instead of a remote UE 102 and a U2N relay UE 100 in case of a multi-hop U2N relay connection).

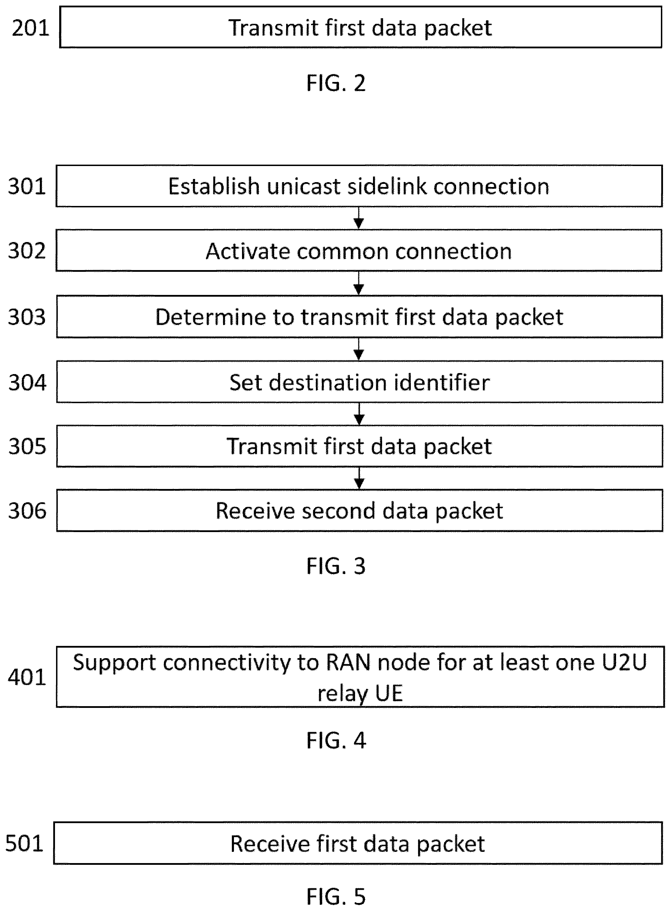

FIG. 2 illustrates a flow chart according to an example embodiment of a method performed by an apparatus 1300. For example, the apparatus 1300 may be, or comprise, or be comprised in, a user equipment such as the U2N relay UE 100 described above (in case of a multi-hop U2N relay), or an end-UE (in case of a multi-hop U2U relay).

Referring to FIG. 2, in block 201, the apparatus 100 transmits a first data packet to at least one of a plurality of user-equipment-to-user-equipment, U2U, relay user equipments 100A, 100B, 100C, wherein the first data packet comprises at least one of: a system information block, a paging message, an acknowledgement for a small data transmission, a connection setup response, a connection release response, or path information comprising information associated with the apparatus.

A destination identifier in a control header of the first data packet may be addressed to the at least one of the plurality of U2U relay user equipments.

In one option, the first data packet may be transmitted via an end-to-end sidelink connection 131, 132, 133 between the apparatus and the at least one U2U user equipment (see FIG. 1C).

In another option, the first data packet may be transmitted over a common connection 140 used across at least the apparatus 100 and the plurality of U2U user equipments 100A, 100B, 100C (see FIG. 1D). For example, the first data packet may be transmitted over a pre-defined control channel 144 between the apparatus 100 and the at least one U2U user equipment 100C.

For example, the first data packet may be an SL RRC packet of the U2U-SRB 144 transmitted on the associated U2U-SCCH, as described above.

FIG. 3 illustrates a flow chart according to an example embodiment of a method performed by an apparatus 1300. For example, the apparatus 1300 may be, or comprise, or be comprised in, a user equipment such as the U2N relay UE 100 described above (in case of a multi-hop U2N relay), or an end-UE (in case of a multi-hop U2U relay).

Referring to FIG. 3, in block 301, the apparatus 100 establishes a unicast sidelink connection 164 between the apparatus 100 and a neighboring user equipment 100C, wherein the unicast sidelink connection 164 comprises one hop of a multi-hop connection 130 established between the apparatus 100 and a remote user equipment 102 via a plurality of user-equipment-to-user-equipment, U2U, relay user equipments 100A, 100B, 100C, the neighboring user equipment 100C comprising one of the plurality of U2U relay user equipments 100A, 100B, 100C.

In block 302, the apparatus 100 activates a common connection 140 over the unicast sidelink connection 164. The common connection may include at least one of: a control channel, a common control channel, a pre-defined control channel, a common bearer, a common signaling radio bearer, or a pre-defined signaling radio bearer 144.

The common connection may be used across at least the apparatus 100 and the plurality of U2U relay user equipments 100A, 100B, 100C.

In block 303, the apparatus 100 determines to transmit a first data packet to at least one of the plurality of U2U relay user equipments 100A, 100B, 100C over the common connection 140.

In block 304, the apparatus 100 sets a destination identifier in a control header of the first data packet to address the at least one of the plurality of U2U relay user equipments 100A, 100B, 100C.

In block 305, the apparatus 100 transmits the first data packet to the neighboring user equipment 100C over the common connection 140.

The first data packet comprises at least one of: a system information block, a paging message, an acknowledgement for a small data transmission, a connection setup response, a connection release response, or path information comprising information associated with the apparatus.

For example, the first data packet may be an SL RRC packet of the U2U-SRB 144 transmitted on the associated U2U-SCCH, as described above.

In block 306, the apparatus 100 may receive, from the neighboring user equipment 100C, over the common connection 140, a second data packet transmitted from a U2U relay user equipment of the plurality of U2U relay user equipments 100A, 100B, 100C over the common connection 140, wherein a source identifier in a control header of the second data packet identifies the U2U relay user equipment that transmitted the second data packet.

For example, the second data packet may be an SL RRC packet of the U2U-SRB 144 received on the associated U2U-SCCH, as described above.

For example, the second data packet may comprise at least one of: a request for a system information block, a request for monitoring a paging message, a request for a small data transmission, a connection setup request, a connection setup release, or path information comprising information associated with at least the U2U relay user equipment that transmitted the second data packet.

Herein the terms "first data packet" and "second data packet" are used to distinguish the data packets, and they do not necessarily mean a specific order of the data packets. For example, the second data packet may alternatively be received before transmitting the first data packet, in which case the first data packet may be transmitted in response the second data packet.

FIG. 4 illustrates a flow chart according to an example embodiment of a method performed by an apparatus 1300. For example, the apparatus 1300 may be, or comprise, or be comprised in, a user equipment such as the U2N relay UE 100 described above (in case of a multi-hop U2N relay), or an end-UE (in case of a multi-hop U2U relay). The functions illustrated in FIG. 4 may be performed in addition to the functions illustrated in FIG. 2 and/or FIG. 3.

Referring to FIG. 4, in block 401, the apparatus 100 supports connectivity to a radio access network node 104 for at least one of the plurality of U2U relay user equipments 100A, 100B, 100C over the unicast sidelink connection 164 or the common connection 140. In other words, the apparatus 100 may act as a relay for enabling the at least one of the plurality of U2U relay user equipments to communicate with the radio access network node, such that the at least one of the plurality of U2U relay user equipments may also act as a remote UE served by the radio access network node 104.

FIG. 5 illustrates a flow chart according to an example embodiment of a method performed by an apparatus 1300. For example, the apparatus 1300 may be, or comprise, or be comprised in, a user equipment such as one of the U2U relay UEs 100A, 100B, 100C described above.

Referring to FIG. 5, in block 501, the apparatus receives a first data packet from a user-equipment-to-network, U2N user equipment 100 or a user-equipment-to-user-equipment, U2U, relay user equipment of a plurality of U2U relay user equipments 100A, 100B, 100C, the plurality of U2U relay user equipments comprising the apparatus and one or more other U2U relay user equipments.

The first data packet comprises at least one of: a system information block, a paging message, an acknowledgement for a small data transmission, a connection setup response, a connection release response, or path information comprising information associated with at least one of: the U2N user equipment or the U2U relay user equipment.

A destination identifier in a control header of the first data packet may be addressed to at least one of: the apparatus, the at least one of the one or more other U2U relay user equipments, the U2N relay user equipment, or the remote user equipment.

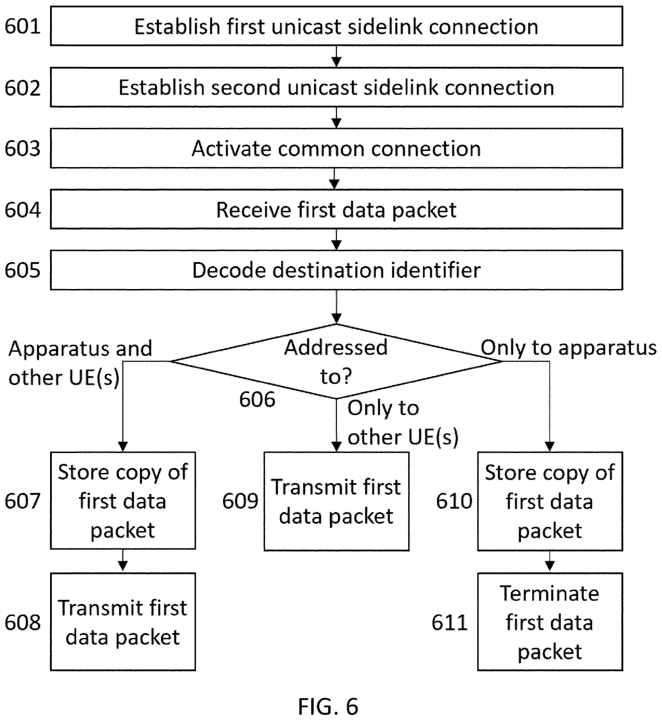

FIG. 6 illustrates a flow chart according to an example embodiment of a method performed by an apparatus 1300. For example, the apparatus 1300 may be, or comprise, or be comprised in, a user equipment such as one of the U2U relay UEs 100A, 100B, 100C described above.

Referring to FIG. 6, in block 601, the apparatus establishes a first unicast sidelink connection 161, 162, 163, 164 between the apparatus and a first neighboring user equipment, wherein the first unicast sidelink connection comprises one hop of a multi-hop connection 130 established between a user-equipment-to-network (U2N) user equipment 100 and a remote user equipment 102 via a plurality of user-equipment-to-user-equipment, U2U, relay user equipments 100A, 100B, 100C, the plurality of U2U relay user equipments comprising the apparatus and one or more other U2U relay user equipments, the first neighboring user equipment comprising the U2N relay user equipment or one of the one or more other U2U relay user equipments;

For example, if the apparatus is the third U2U relay UE 100C of FIG. 1D, then the first neighboring user equipment may refer to the U2N relay UE 100.

As another example, if the apparatus is the second U2U relay UE 100B of FIG. 1D, then the first neighboring user equipment may refer to the third U2U relay UE 100C.

As another example, if the apparatus is the first U2U relay UE 100A of FIG. 1D, then the first neighboring user equipment may refer to the second U2U relay UE 100B.

In block 602, the apparatus establishes a second unicast sidelink connection 161, 162, 163, 164 between the apparatus and a second neighboring user equipment, the second neighboring user equipment comprising the remote user equipment 102 or one of the one or more other U2U relay user equipments, wherein the second unicast sidelink connection comprises another hop of the multi-hop connection 130.

For example, if the apparatus is the third U2U relay UE 100C of FIG. 1D, then the second neighboring user equipment may refer to the second U2U relay UE 100B.

As another example, if the apparatus is the second U2U relay UE 100B of FIG. 1D, then the second neighboring user equipment may refer to the first U2U relay UE 100A.

As another example, if the apparatus is the first U2U relay UE 100A of FIG. 1D, then the second neighboring user equipment may refer to the remote UE 102.

In block 603, the apparatus activates a common connection 140 over the first unicast sidelink connection and the second unicast sidelink connection, wherein the common connection 140 is used across at least the U2N user equipment 100 and the plurality of U2U relay user equipments 100A, 100B, 100C.

The common connection 140 includes at least one of: a control channel, a common control channel, a pre-defined control channel, a common bearer, a common signaling radio bearer, or a pre-defined signaling radio bearer 142, 143, 144.

In block 604, the apparatus receives a first data packet from the first neighboring user equipment or the second neighboring user equipment over the common connection 140, wherein a destination identifier in a control header of the first data packet is addressed to at least one of: the apparatus, or at least one other user equipment using the common connection 140.

For example, the first data packet may be an SL RRC packet of the U2U-SRB received on the associated U2U-SCCH, as described above.

The first data packet comprises at least one of: a system information block, a paging message, an acknowledgement for a small data transmission, a connection setup response, a connection release response, or path information comprising information associated with at least one of: the U2N user equipment or the first neighboring user equipment or the second neighboring user equipment.

In block 605, the apparatus decodes the destination identifier of the first data packet.

In block 606, based on decoding the destination identifier, the apparatus determines the intended recipient(s) of the first data packet. In other words, the apparatus may determine whether the first data packet is addressed to the apparatus and/or at least one other user equipment using the common connection 140, such as at least one of the one or more other U2U relay user equipments, or the U2N user equipment 100, or the remote user equipment 102.

In block 607, based on determining that the first data packet is addressed to the apparatus and the at least one other user equipment using the common connection 140 (606: apparatus and other UE(s)), the apparatus stores a copy of the first data packet for example in its internal memory.

In block 608, following block 607, the apparatus transmits the first data packet to the second neighboring user equipment or the first neighboring user equipment over the common connection 140.

In block 609, based on determining that the first data packet is addressed to the at least one other user equipment using the common connection 140 (606: only to other UE(s)), the apparatus transmits the first data packet to the second neighboring user equipment or the first neighboring user equipment over the common connection 140. In this case, the first data packet may not be addressed to the apparatus, and therefore the apparatus may not store the first data packet.

In block 610, based on determining that the first data packet is addressed to the apparatus (606: only to apparatus), the apparatus stores a copy of the first data packet for example in its internal memory.

In block 611, based on determining that the first data packet is addressed to only the apparatus (606: only to apparatus), the apparatus terminates the first data packet. Herein the term "terminate" means that the apparatus does not forward the first data packet to any other UE, but just keeps the first data packet for itself.

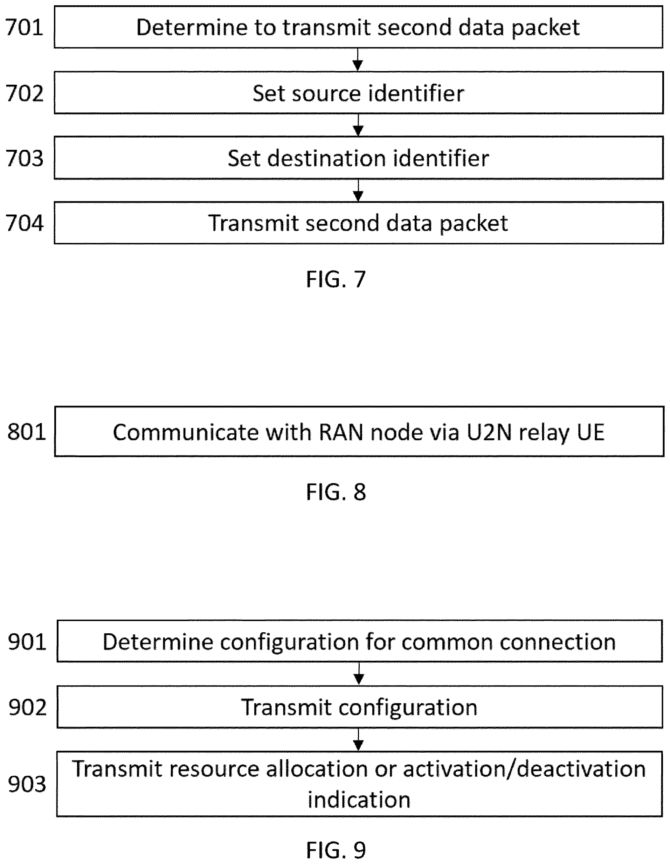

FIG. 7 illustrates a flow chart according to an example embodiment of a method performed by an apparatus 1300. For example, the apparatus 1300 may be, or comprise, or be comprised in, a user equipment such as one of the U2U relay UEs 100A, 100B, 100C described above. The functions illustrated in FIG. 7 may be performed in addition to the functions illustrated in FIG. 5 and/or FIG. 6. For example, the second data packet of FIG. 7 may be transmitted before or after receiving the first data packet of FIG. 6.

Referring to FIG. 7, in block 701, the apparatus determines to transmit a second data packet over the common connection 140 to at least one of: at least one of the one or more other U2U relay user equipments, the U2N user equipment 100, or the remote user equipment 102.

For example, the second data packet may comprise at least one of: a request for a system information block, a request for monitoring a paging message, a request for a small data transmission, a connection setup request, a connection release request, or path information comprising information associated with at least the apparatus.

In block 702, the apparatus sets a source identifier in a control header of the second data packet to identify the apparatus.

In block 703, the apparatus sets a destination identifier in the control header of the second data packet to address at least one of: the at least one of the one or more other U2U relay user equipments, the U2N relay user equipment, or the remote user equipment.

In block 704, the apparatus transmits the second data packet to the first neighboring user equipment or the second neighboring user equipment over the common connection 140.

For example, the second data packet may be an SL RRC packet of the U2U-SRB transmitted on the associated U2U-SCCH, as described above.

FIG. 8 illustrates a flow chart according to an example embodiment of a method performed by an apparatus 1300. For example, the apparatus 1300 may be, or comprise, or be comprised in, a user equipment such as one of the U2U relay UEs 100A, 100B, 100C described above. The functions illustrated in FIG. 8 may be performed in addition to the functions illustrated in FIG. 5 and/or FIG. 6 and/or FIG. 7.

Referring to FIG. 8, in block 801, the apparatus communicates with a radio access network node 104 via the U2N relay user equipment 100 over the first unicast sidelink connection or the common connection 140, wherein the first unicast sidelink connection comprises a hop towards to the U2N relay user equipment 102. In other words, the U2N relay user equipment 102 may act as a relay for enabling the apparatus to communicate with the radio access network node 104, such that the apparatus may also act as a remote UE served by the radio access network node 104 in addition to the apparatus acting as a U2U relay UE for the remote UE 102.

FIG. 9 illustrates a flow chart according to an example embodiment of a method performed by an apparatus 1400. For example, the apparatus 1400 may be, or comprise, or be comprised in, a radio access network node 104.

In this example embodiment, the radio access network node 104 (e.g., gNB) may be involved in providing a configuration for the SL U2U-SRB 141, 142, 143, 144 and U2U-SCCH. Furthermore, the radio access network node 104 may have limited control over the use of SL U2U-SRB 141, 142, 143, 144 and U2U-SCCH via the L2 U2N relay UE 100. For example, the radio access network node 104 may provide a resource allocation or an activation or deactivation command for the SL U2U-SRB 141, 142, 143, 144 and U2U-SCCH via the L2 U2N relay UE 100.

Referring to FIG. 9, in block 901, the apparatus 104 determines a configuration for a common connection 140 to be used across at least a user-equipment-to-network, U2N, relay user equipment 100 and a plurality of user-equipment-to-user-equipment, U2U, relay user equipments 100A, 100B, 100C, wherein the plurality of U2U relay user equipments 100A, 100B, 100C are configured to provide a multi-hop connection 130 between the U2N relay user equipment 100 and a remote user equipment 102 via the plurality of U2U relay user equipments 100A, 100B, 100C.

In block 902, the apparatus 104 transmits the configuration to the U2N relay user equipment 100.

In block 903, the apparatus 104 may transmit, to the U2N relay user equipment 100, at least one of: a resource allocation for the common connection 140, an indication to activate the common connection 140, or an indication to deactivate the common connection 140.

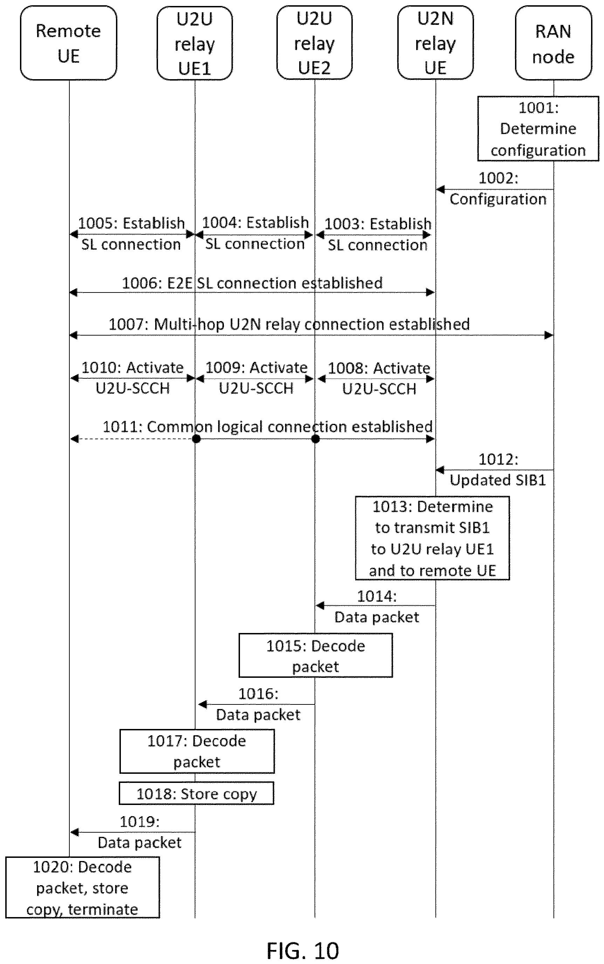

FIG. 10 illustrates a signal flow diagram according to an example embodiment. FIG. 10 illustrates an activation of the U2U-SRB 141, 142, 143, 144 and associated U2U-SCCH for the common U2U relay logical connection 140 across the involved UEs. FIG. 10 also illustrates a Uu message transfer procedure for an updated system information block type 1 (SIB1), wherein this procedure may be carried out over the common U2U relay logical connection 140 using the U2U-SRB 141, 142, 143, 144 and associated U2U-SCCH.

Although two U2U relay UEs (U2U relay UE1 and U2U relay UE2) are illustrated in FIG. 10, it should be noted that the number of U2U relay UEs may also be different than two. In other words, there may be two or more U2U relay UEs. In addition, the signaling procedure illustrated in FIG. 10 may be extended and applied according to the actual number of U2U relay UEs.

Referring to FIG. 10, at 1001, the RAN node may determine a configuration for a control channel (i.e., the U2U-SCCH) to be used for a common logical connection across at least the U2N relay UE and a plurality of U2U relay UEs (e.g., U2U relay UE1 and U2U relay UE2).

At 1002, the RAN node may transmit the configuration to the U2N relay UE.

It should be noted that 1001 and 1002 may be optional. Alternatively, the configuration may be pre-configured to the relevant UEs beforehand, in which case the RAN node does not need to perform 1001 and 1002.

At 1003, a first unicast sidelink connection is established between the U2N relay UE and U2U relay UE2.

At 1004, a second unicast sidelink connection is established between U2U relay UE2 and U2U relay UE1. In this example, the U2N relay UE and U2U relay UE1 may be the neighboring user equipments of U2U relay UE2.

At 1005, a third unicast sidelink connection is established between U2U relay UE1 and the remote UE.

At 1006, an end-to-end sidelink connection is established between the remote UE and the U2N relay UE via the first unicast sidelink connection, the second unicast sidelink connection, and the third unicast sidelink connection (i.e., via U2U relay UE1 and U2U relay UE2). In other words, the first unicast sidelink connection, the second unicast sidelink connection, and the third unicast sidelink connection comprise the hops of the end-to-end sidelink connection in this example.

At 1007, a multi-hop U2N relay connection is established between the remote UE and the RAN node via U2U relay UE1, U2U relay UE2, and the U2N relay UE by using the end-to-end sidelink connection.

At 1008, a first pre-defined control channel is activated between the U2N relay UE and U2U relay UE2 over the first unicast sidelink connection. The first pre-defined control channel may be based on the configuration that may be provided by the RAN node at 1002. Alternatively, the configuration for the first pre-defined control channel, as well as the trigger(s) for activating and deactivating the first pre-defined control channel, may be pre-configured beforehand. The activation of the first pre-defined control channel may mean activating the U2U-SRB and associated U2U-SCCH.

At 1009, a second pre-defined control channel is activated between U2U relay UE1 and U2U relay UE2 over the second unicast sidelink connection. The second pre-defined control channel may be based on the configuration that may be provided by the RAN node at 1002. Alternatively, the configuration for the second pre-defined control channel, as well as the trigger(s) for activating and deactivating the second pre-defined control channel, may be pre-configured beforehand. The activation of the second pre-defined control channel may mean activating the U2U-SRB and associated U2U-SCCH.

The activation and configuration of the first pre-defined control channel may be used as a trigger as well as a configuration for the activation and configuration of the second pre-defined control channel. In this way, the pre-defined control channels may be activated and configured hop-by-hop.

At 1010, a third pre-defined control channel may be activated between U2U relay UE2 and the remote UE over the third unicast sidelink connection. The third pre-defined control channel may be based on the configuration that may be provided by the RAN node at 1002. Alternatively, the configuration for the third pre-defined control channel, as well as the trigger(s) for activating and deactivating the third pre-defined control channel, may be pre-configured beforehand. The activation of the third pre-defined control channel may mean activating the U2U-SRB and associated U2U-SCCH.

The activation and configuration of the second pre-defined control channel may be used as a trigger as well as a configuration for the activation and configuration of the third pre-defined control channel. In this way, the pre-defined control channels may be activated and configured hop-by-hop.

At 1011, a common logical connection is established across at least the U2N relay UE, U2U relay UE2, and U2U relay UE1, and possibly also the remote UE, by using the pre-defined control channels (i.e., at least the first pre-defined control channel and the second pre-defined control channel, and possibly also the third pre-defined control channel).

At 1012, the RAN node transmits an updated SIB1 to the U2N relay UE.

At 1013, the U2N relay UE determines, for example based on path information, to transmit a first data packet comprising the received SIB1 to U2U relay UE1 and to the remote UE over the common logical connection. The U2N relay UE may set a destination identifier in a control header of the first data packet to broadcast ID.

In this example, it is assumed that U2U relay UE1 is in IDLE state of the same serving cell of the RAN node as the remote UE and the U2N relay UE, whereas U2U relay UE2 may not be authorized to access the RAN node. In other words, the U2N relay UE may support connectivity to the radio access network node for U2U relay UE1 and the remote UE over the common logical connection. Since U2U relay UE2 is not authorized to access the RAN node, U2U relay UE2 does not need the SIB1.

At 1014, the U2N relay UE transmits the first data packet comprising the SIB1 to U2U relay UE2 over the first pre-defined control channel. For example, the first data packet may be an SL RRC packet of the U2U-SRB transmitted on the associated U2U-SCCH.

At 1015, U2U relay UE2 decodes the first data packet. In this example, since U2U relay UE2 is not authorized to access the RAN node, U2U relay UE2 determines to discard the SIB1 and forwards it to U2U relay UE1.

At 1016, U2U relay UE2 transmits, or forwards, the first data packet to U2U relay UE1 over the second pre-defined control channel.

At 1017, U2U relay UE1 decodes the first data packet. In this example, since U2U relay UE1 is authorized to access the RAN node, U2U relay UE1 determines to store a copy of the SIB1 and forward it to the remote UE.

At 1018, U2U relay UE1 stores a copy of the SIB1 for example in its internal memory.

At 1019, U2U relay UE1 transmits, or forwards, the first data packet to the remote UE over the third pre-defined control channel or the third unicast sidelink connection.

At 1020, the remote UE decodes the first data packet, stores a copy of the SIB1, and terminates the first data packet.

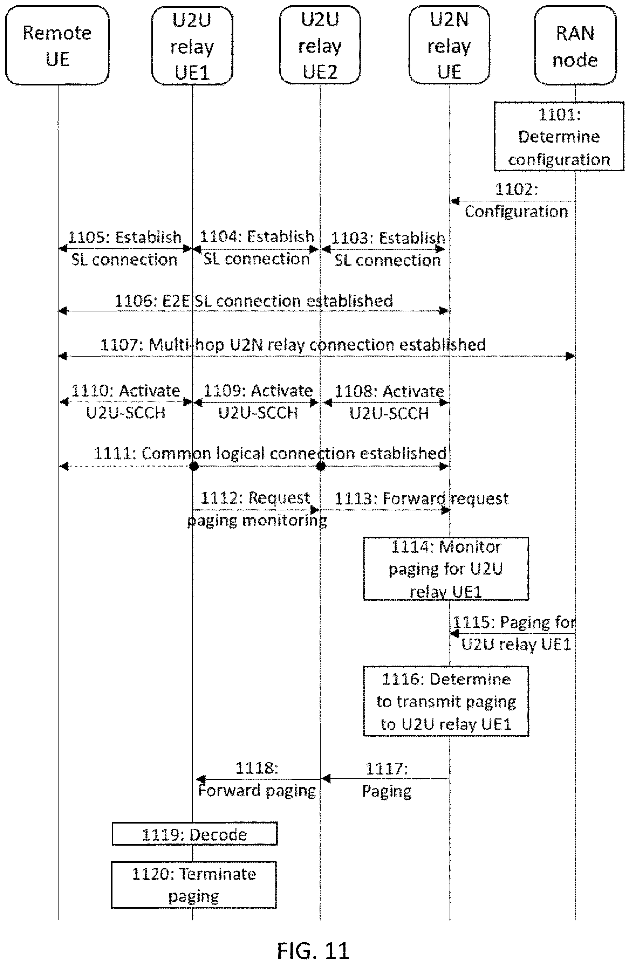

FIG. 11 illustrates a signal flow diagram according to an example embodiment. FIG. 11 illustrates a Uu message transfer procedure for a paging of U2U relay UE1 (as an example) over the common U2U relay logical connection 140 using the U2U-SRB 141, 142, 143, 144 and associated U2U-SCCH. In this example, it is assumed that U2U relay UE1 is in IDLE state towards the RAN node (e.g., serving gNB).

Although two U2U relay UEs (U2U relay UE1 and U2U relay UE2) are illustrated in FIG. 11, it should be noted that the number of U2U relay UEs may also be different than two. In other words, there may be two or more U2U relay UEs. In addition, the signaling procedure illustrated in FIG. 11 may be extended and applied according to the actual number of U2U relay UEs.

Referring to FIG. 11, at 1101, the RAN node may determine a configuration for a control channel (i.e., the U2U-SCCH) to be used for a common logical connection across at least the U2N relay UE and a plurality of U2U relay UEs (e.g., U2U relay UE1 and U2U relay UE2).

At 1102, the RAN node may transmit the configuration to the U2N relay UE.

It should be noted that 1101 and 1102 may be optional. Alternatively, the configuration may be pre-configured to the relevant UEs beforehand, in which case the RAN node does not need to perform 1101 and 1102.

At 1103, a first unicast sidelink connection is established between the U2N relay UE and U2U relay UE2.

At 1104, a second unicast sidelink connection is established between U2U relay UE2 and U2U relay UE1. In this example, the U2N relay UE and U2U relay UE1 may be the neighboring user equipments of U2U relay UE2.

At 1105, a third unicast sidelink connection is established between U2U relay UE1 and the remote UE.

At 1106, an end-to-end sidelink connection is established between the remote UE and the U2N relay UE via the first unicast sidelink connection, the second unicast sidelink connection, and the third unicast sidelink connection (i.e., via U2U relay UE1 and U2U relay UE2). In other words, the first unicast sidelink connection, the second unicast sidelink connection, and the third unicast sidelink connection comprise the hops of the end-to-end sidelink connection in this example.

At 1107, a multi-hop U2N relay connection is established between the remote UE and the RAN node via U2U relay UE1, U2U relay UE2, and the U2N relay UE by using the end-to-end sidelink connection.

At 1108, a first pre-defined control channel is activated between the U2N relay UE and U2U relay UE2 over the first unicast sidelink connection. The first pre-defined control channel may be based on the configuration that may be provided by the RAN node at 1002. Alternatively, the configuration for the first pre-defined control channel, as well as the trigger(s) for activating and deactivating the first pre-defined control channel, may be pre-configured beforehand. The activation of the first pre-defined control channel may mean activating the U2U-SRB and associated U2U-SCCH.

At 1109, a second pre-defined control channel is activated between U2U relay UE1 and U2U relay UE2 over the second unicast sidelink connection. The second pre-defined control channel may be based on the configuration that may be provided by the RAN node at 1002. Alternatively, the configuration for the second pre-defined control channel, as well as the trigger(s) for activating and deactivating the second pre-defined control channel, may be pre-configured beforehand. The activation of the second pre-defined control channel may mean activating the U2U-SRB and associated U2U-SCCH.

The activation and configuration of the first pre-defined control channel may be used as a trigger as well as a configuration for the activation and configuration of the second pre-defined control channel. In this way, the pre-defined control channels may be activated and configured hop-by-hop.

At 1110, a third pre-defined control channel may be activated between U2U relay UE2 and the remote UE over the third unicast sidelink connection. The third pre-defined control channel may be based on the configuration that may be provided by the RAN node at 1002. Alternatively, the configuration for the third pre-defined control channel, as well as the trigger(s) for activating and deactivating the third pre-defined control channel, may be pre-configured beforehand. The activation of the third pre-defined control channel may mean activating the U2U-SRB and associated U2U-SCCH.

The activation and configuration of the second pre-defined control channel may be used as a trigger as well as a configuration for the activation and configuration of the third pre-defined control channel. In this way, the pre-defined control channels may be activated and configured hop-by-hop.

At 1111, a common logical connection is established across at least the U2N relay UE, U2U relay UE2, and U2U relay UE1, and possibly also the remote UE, by using the pre-defined control channels (i.e., at least the first pre-defined control channel and the second pre-defined control channel, and possibly also the third pre-defined control channel).

At 1112, U2U relay UE1 determines to transmit a first data packet over the common logical connection to the U2N relay UE, wherein the first data packet comprises a request for paging monitoring for U2U relay UE1. U2U relay UE1 sets a source identifier in a control header of the first data packet to address U2U relay UE1. U2U relay UE1 transmits the first data packet to its neighboring user equipment, i.e., U2U relay UE2, over the second pre-defined control channel. For example, the first data packet may be an SL RRC packet of the U2U-SRB transmitted on the associated U2U-SCCH.

The request may include the UE contexts of U2U relay UE1 for its role operating as an IDLE or INACTIVE remote UE (i.e., U2U relay UE1 may also act as a remote UE in addition to its role as a U2U relay UE). These UE contexts may be needed for the U2N relay UE to monitor paging for U2U relay UE1

At 1113, U2U relay UE2 decodes the first data packet and determines that the first data packet is addressed to the U2N relay UE. Thus, U2U relay UE2 transmits, or forwards, the first data packet to the U2N relay UE over the first pre-defined control channel.

At 1114, the U2N relay UE decodes the first data packet and monitors paging for U2U relay UE1 based on the decoded paging monitoring request.

At 1115, based on the monitoring, the U2N relay UE receives a paging message for U2U relay UE1 from the RAN node.

At 1116, the U2N relay UE determines to transmit a second data packet comprising the paging message to U2U relay UE1 over the common logical connection. The U2N relay UE sets a destination identifier in a control header of the second data packet to address U2U relay UE1.

At 1117, the U2N relay UE transmits the second data packet to U2U relay UE2 over the first pre-defined control channel. For example, the second data packet may be an SL RRC packet of the U2U-SRB transmitted on the associated U2U-SCCH.

At 1118, U2U relay UE2 decodes the second data packet and determines that it is addressed to U2U relay UE1. Thus, U2U relay UE2 transmits, or forwards, the second data packet to U2U relay UE1 over the second pre-defined control channel.

At 1119, U2U relay UE1 decodes the second data packet. U2U relay UE1 determines, based on decoding the destination identifier in the control header of the second data packet, whether the second data packet is addressed to only U2U relay UE1.

At 1120, based on determining that the second data packet is addressed to only U2U relay UE1, U2U relay UE1 terminates the second data packet.

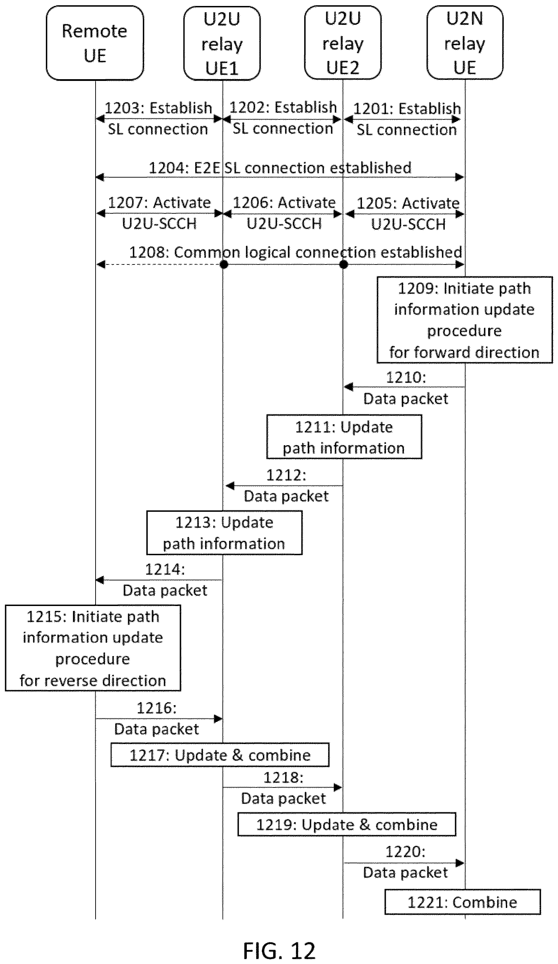

FIG. 12 illustrates a signal flow diagram according to an example embodiment. FIG. 12 illustrates a path information update procedure for the involved UEs to get updated and exposable context information of each other while serving the multi-hop U2N relay connection for the remote UE. This procedure may be carried out over the common U2U relay logical connection 140 using the U2U-SRB 141, 142, 143, 144 and associated U2U-SCCH.

The path information refers to the information about the path or route taken by the data packets as they travel through the relay chain. For example, the path information may comprise at least one of: the identities of the relay nodes that the packets pass through, the sequence in which they are visited, and the quality of the wireless links between the relay nodes. The path information update procedure may be used to keep this information up-to-date as the network topology or some UE contexts, such as proximity service (ProSe) L2 IDs of the relay nodes used as SRC or DST IDs, may change over time. It is noted that ProSe L2 ID may be autonomously assigned by a UE itself for sidelink communications and may need to be reassigned from time to time for security or uniqueness reasons.

Although two U2U relay UEs (U2U relay UE1 and U2U relay UE2) are illustrated in FIG. 12, it should be noted that the number of U2U relay UEs may also be different than two. In other words, there may be two or more U2U relay UEs. In addition, the signaling procedure illustrated in FIG. 12 may be extended and applied according to the actual number of U2U relay UEs.

Referring to FIG. 12, at 1201, a first unicast sidelink connection is established between the U2N relay UE and U2U relay UE2.

At 1202, a second unicast sidelink connection is established between U2U relay UE2 and U2U relay UE1. In this example, the U2N relay UE and U2U relay UE1 may be the neighboring user equipments of U2U relay UE2.

At 1203, a third unicast sidelink connection is established between U2U relay UE1 and the remote UE.

At 1204, an end-to-end sidelink connection is established between the remote UE and the U2N relay UE via the first unicast sidelink connection, the second unicast sidelink connection, and the third unicast sidelink connection (i.e., via U2U relay UE1 and U2U relay UE2). In other words, the first unicast sidelink connection, the second unicast sidelink connection, and the third unicast sidelink connection comprise the hops of the end-to-end sidelink connection in this example.

At 1205, a first pre-defined control channel is activated between the U2N relay UE and U2U relay UE2 over the first unicast sidelink connection. For example, the activation may mean activating the U2U-SRB and associated U2U-SCCH.

At 1206, a second pre-defined control channel is activated between U2U relay UE1 and U2U relay UE2 over the second unicast sidelink connection. For example, the activation may mean activating the U2U-SRB and associated U2U-SCCH.

The activation and configuration of the first pre-defined control channel may be used as a trigger as well as a configuration for the activation and configuration of the second pre-defined control channel. In this way, the pre-defined control channels may be activated and configured hop-by-hop.

At 1207, a third pre-defined control channel may be activated between U2U relay UE2 and the remote UE over the third unicast sidelink connection. For example, the activation may mean activating the U2U-SRB and associated U2U-SCCH.

The activation and configuration of the second pre-defined control channel may be used as a trigger as well as a configuration for the activation and configuration of the third pre-defined control channel. In this way, the pre-defined control channels may be activated and configured hop-by-hop.

At 1208, a common logical connection is established across at least the U2N relay UE, U2U relay UE2, and U2U relay UE1, and possibly also the remote UE, by using the pre-defined control channels (i.e., at least the first pre-defined control channel and the second pre-defined control channel, and possibly also the third pre-defined control channel).

At 1209, the U2N relay UE determines to initiate a path information update procedure using the common logical connection for the forward direction (i.e., from the U2N relay UE towards the remote UE).

At 1210, the U2N relay UE transmits a first data packet to its neighboring UE, i.e., U2U relay UE2 over the first pre-defined control channel. The U2N relay UE may set a destination identifier in a control header of the first data packet to broadcast ID. The first data packet transmitted by the U2N relay UE may comprise initial path information comprising UE information associated with the initiating UE, i.e., the U2N relay UE. For example, the first data packet may be an SL RRC packet of the U2U-SRB transmitted on the associated U2U-SCCH.

At 1211, U2U relay UE2 decodes the first data packet and updates the path information by adding UE information associated with U2U relay UE2 to the path information.

At 1212, U2U relay UE2 transmits the first data packet to U2U relay UE1 over the second pre-defined control channel. At this stage, the first data packet comprises the path information of the U2N relay UE and U2U relay UE2.

At 1213, U2U relay UE1 decodes the first data packet and updates the path information by adding UE information associated with U2U relay UE1 to the path information.

This way, the path information may be updated hop-by-hop by adding UE information of the receiving UE before forwarding the path information further. The UE information associated with an individual UE may comprise the exposable and/or discoverable UE contexts, such as at least one of: the L2 ID(s) of the UE for sidelink communication in one or more roles (e.g., U2U relay UE, remote UE, U2N relay UE), authorized serving PLMN ID(s), and/or sidelink conditions on the respective hops.

At 1214, U2U relay UE1 transmits the first data packet comprising the to the remote UE over the third pre-defined control channel or the third unicast sidelink connection. At this stage, the first data packet comprises the path information of the U2N relay UE, U2U relay UE2, and U2U relay UE1.

At 1215, the remote UE decodes the first data packet comprising the updated path information of all the relay UEs, stores the updated path information, and initiates a path information update procedure using the common logical connection for the reverse direction (i.e., from the remote UE towards the U2N relay UE).

Both the forward and reverse path information updates, as well as combining the outcomes thereof, may be needed to ensure that all the UEs of the relay chain have the same and full path information. Because the path information update is initiated from the U2N relay UE, and UE information of each individual UE in the relay chain is added to it hop-by-hop, the remote UE will be the first UE that has the full path information or combined information including information of itself.

At 1216, the remote UE transmits a second data packet to U2U relay UE1 over the third pre-defined control channel or the third unicast sidelink connection. The remote UE may set a destination identifier in a control header of the second data packet to broadcast ID. For example, the second data packet may be an SL RRC packet of the U2U-SRB transmitted on the associated U2U-SCCH.

For the reverse direction initiated by the remote UE, there may be two options for the contents of the second data packet: 1) the full path information (or combined information) obtained from the path information update in the forward direction; or 2) initial path information comprising the UE information of the remote UE, which is updated hop-by-hop in the reverse direction in a similar manner as done for the forward direction. Option 2 may involve less overhead.

At 1217, U2U relay UE1 decodes the second data packet and updates the path information (in case of option 2) by adding UE information associated with U2U relay UE1 to the path information. U2U relay UE1 may combine the updated path information from both the forward and reverse directions to obtain the full path information.

At 1218, U2U relay UE1 transmits the second data packet to U2U relay UE2 over the second pre-defined control channel. At this stage, the second data packet comprises the path information of the remote UE and U2U relay UE1 for the reverse direction (in case of option 2).

At 1219, U2U relay UE2 decodes the second data packet and updates the path information by adding UE information associated with U2U relay UE2 to the path information (in case of option 2). U2U relay UE2 may combine the updated path information from both the forward and reverse directions to obtain the full path information.

At 1220, U2U relay UE2 transmits the second data packet to the U2N relay UE over the first pre-defined control channel. At this stage, the second data packet comprises the path information of the remote UE, U2U relay UE1, and U2U relay UE2 for the reverse direction (in case of option 2).

At 1221, the U2N relay UE combines the updated path information from both the forward and reverse directions to obtain the full path information.

The blocks, related functions, and information exchanges (e.g., data packets) described above by means of FIGS. 2-12 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

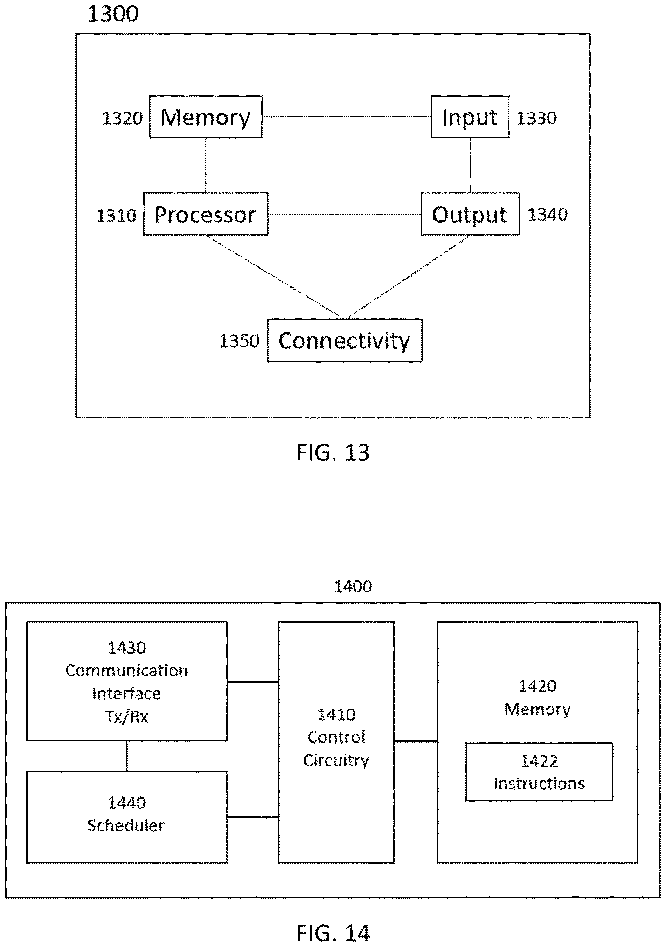

FIG. 13 illustrates an example of an apparatus 1300 comprising means for performing one or more of the example embodiments described above. For example, the apparatus 1300 may be an apparatus such as, or comprising, or comprised in, a user equipment, such as a U2U relay UE 100A, 100B, 100C, or a U2N relay UE 100, or a remote UE 102. The user equipment may also be called a wireless communication device, a subscriber unit, a mobile station, a remote terminal, an access terminal, a user terminal, a terminal device, or user device.

The apparatus 1300 may comprise a circuitry or a chipset applicable for realizing one or more of the example embodiments described above. For example, the apparatus 1300 may comprise at least one processor 1310. The at least one processor 1310 interprets instructions (e.g., computer program instructions) and processes data. The at least one processor 1310 may comprise one or more programmable processors. The at least one processor 1310 may comprise programmable hardware with embedded firmware and may, alternatively or additionally, comprise one or more application-specific integrated circuits (ASICs).

The at least one processor 1310 is coupled to at least one memory 1320. The at least one processor is configured to read and write data to and from the at least one memory 1320. The at least one memory 1320 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 1320 stores computer readable instructions that are executed by the at least one processor 1310 to perform one or more of the example embodiments described above. For example, non-volatile memory stores the computer readable instructions, and the at least one processor 1310 executes the instructions using volatile memory for temporary storage of data and/or instructions. The computer readable instructions may refer to computer program code.

The computer readable instructions may have been pre-stored to the at least one memory 1320 or, alternatively or additionally, they may be received, by the apparatus, via an electromagnetic carrier signal and/or may be copied from a physical entity such as a computer program product. Execution of the computer readable instructions by the atleast one processor 1310 causes the apparatus 1300 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 1300 may further comprise, or be connected to, an input unit 1330. The input unit 1330 may comprise one or more interfaces for receiving input. The one or more interfaces may comprise for example one or more temperature, motion and/or orientation sensors, one or more cameras, one or more accelerometers, one or more microphones, one or more buttons and/or one or more touch detection units. Further, the input unit 1330 may comprise an interface to which external devices may connect to.

The apparatus 1300 may also comprise an output unit 1340. The output unit may comprise or be connected to one or more displays capable of rendering visual content, such as a light emitting diode (LED) display, a liquid crystal display (LCD) and/or a liquid crystal on silicon (LCoS) display. The output unit 1340 may further comprise one or more audio outputs. The one or more audio outputs may be for example loudspeakers.

The apparatus 1300 further comprises a connectivity unit 1350. The connectivity unit 1350 enables wireless connectivity to one or more external devices. The connectivity unit 1350 comprises at least one transmitter and at least one receiver that may be integrated to the apparatus 1300 or that the apparatus 1300 may be connected to. The at least one transmitter comprises at least one transmission antenna, and the at least one receiver comprises at least one receiving antenna. The connectivity unit 1350 may comprise an integrated circuit or a set of integrated circuits that provide the wireless communication capability for the apparatus 1300. Alternatively, the wireless connectivity may be a hardwired application-specific integrated circuit (ASIC). The connectivity unit 1350 may also provide means for performing at least some of the blocks or functions of one or more example embodiments described above. The connectivity unit 1350 may comprise one or more components, such as: power amplifier, digital front end (DFE), analog-to-digital converter (ADC), digital-to-analog converter (DAC), frequency converter, (de) modulator, and/or encoder/decoder circuitries, controlled by the corresponding controlling units.

It is to be noted that the apparatus 1300 may further comprise various components not illustrated in FIG. 13. The various components may be hardware components and/or software components.

FIG. 14 illustrates an example of an apparatus 1400 comprising means for performing one or more of the example embodiments described above. For example, the apparatus 1400 may be an apparatus such as, or comprising, or comprised in, a radio access network node 104.

The radio access network node may also be referred to, for example, as a network element, an access node, a next generation radio access network (NG-RAN) node, a NodeB, an eNB, a gNB, a base transceiver station (BTS), a base station, an NR base station, a 5G base station, an access node, an access point (AP), a cell site, a relay node, a repeater, an integrated access and backhaul (IAB) node, an IAB donor node, a distributed unit (DU), a central unit (CU), a baseband unit (BBU), a radio unit (RU), a radio head, a remote radio head (RRH), or a transmission and reception point (TRP).

The apparatus 1400 may comprise, for example, a circuitry or a chipset applicable for realizing one or more of the example embodiments described above. The apparatus 1400 may be an electronic device comprising one or more electronic circuitries. The apparatus 1400 may comprise a communication control circuitry 1410 such as at least one processor, and at least one memory 1420 storing instructions 1422 which, when executed by the at least one processor, cause the apparatus 1400 to carry out one or more of the example embodiments described above. Such instructions 1422 may, for example, include computer program code (software). The at least one processor and the at least one memory storing the instructions may provide the means for providing or causing the performance of any of the methods and/or blocks described above.

The processor is coupled to the memory 1420. The processor is configured to read and write data to and from the memory 1420. The memory 1420 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1420 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1420 or, alternatively or additionally, they may be received, by the apparatus, via an electromagnetic carrier signal and/or may be copied from a physical entity such as a computer program product. Execution of the computer readable instructions causes the apparatus 1400 to perform one or more of the functionalities described above.

The memory 1420 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 1400 may further comprise or be connected to a communication interface 1430, such as a radio unit, comprising hardware and/or software for realizing communication connectivity with one or more wireless communication devices according to one or more communication protocols. The communication interface 1430 comprises at least one transmitter (Tx) and at least one receiver (Rx) that may be integrated to the apparatus 1400 or that the apparatus 1400 may be connected to. The communication interface 1430 may provide means for performing some of the blocks for one or more example embodiments described above. The communication interface 1430 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1430 provides the apparatus with radio communication capabilities to communicate in the wireless communication network. The communication interface may, for example, provide a radio interface to one or more wireless communication devices. The apparatus 1400 may further comprise or be connected to another interface towards a core network such as the network coordinator apparatus or AMF, and/or to the access nodes of the cellular communication system.

The apparatus 1400 may further comprise a scheduler 1440 that is configured to allocate radio resources. The scheduler 1440 may be configured along with the communication control circuitry 1410 or it may be separately configured.

It is to be noted that the apparatus 1400 may further comprise various components not illustrated in FIG. 14. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising at least one processor, and at least one memory storing instructions that, when executed by the at least one processor, cause the apparatus at least to:
transmit a first data packet to at least one of a plurality of user-equipment-to-user-equipment, U2U, relay user equipments;
wherein the first data packet comprises at least one of: a system information block, a paging message, an acknowledgement for a small data transmission, a connection setup response, a connection release response, or path information comprising information associated with the apparatus.

2. The apparatus according to claim 1, further being caused to:
establish a unicast sidelink connection between the apparatus and a neighboring user equipment, wherein the unicast sidelink connection comprises one hop of a multi-hop connection established between the apparatus and a remote user equipment via the plurality of U2U relay user equipments, the neighboring user equipment comprising one of the plurality of U2U relay user equipments; and
transmit the first data packet to the neighboring user equipment over a common connection;
wherein the common connection includes at least one of: a control channel, a common control channel, a pre-defined control channel, a common bearer, a common signaling radio bearer, or a pre-defined signaling radio bearer; and
wherein the common connection is used across at least the apparatus and the plurality of U2U relay user equipments.

3. The apparatus according to any of claims 1-2, further being caused to:
transmit the first data packet to the neighboring user equipment, wherein a destination identifier in a control header of the first data packet is addressed to the at least one of the plurality of U2U relay user equipments; or
receive, from the neighboring user equipment, a second data packet transmitted from a U2U relay user equipment of the plurality of U2U relay user equipments, wherein a source identifier in a control header of the second data packet identifies the U2U relay user equipment that transmitted the second data packet.

4. The apparatus according to any of claims 2-3, further being caused to:
activate the common connection over the unicast sidelink connection before transmitting the first data packet; and
transmit the first data packet to the neighboring user equipment over the common connection; and/or
receive the second data packet from the neighboring user equipment, over the common connection.

5. The apparatus according to claim 3 or 4, wherein the second data packet comprises at least one of: a request for a system information block, a request for monitoring a paging message, a request for a small data transmission, a connection setup request, a connection release request, or path information comprising information associated with at least the U2U relay user equipment that transmitted the second data packet.

6. The apparatus according to any of claims 1-5, further being caused to:
support connectivity to a radio access network node for at least one of the plurality of U2U relay user equipments over the unicast sidelink connection or the common connection.

7. An apparatus comprising at least one processor, and at least one memory storing instructions that, when executed by the at least one processor, cause the apparatus at least to:
receive a first data packet from a user-equipment-to-network, U2N user equipment or a user-equipment-to-user-equipment, U2U, relay user equipment of a plurality of U2U relay user equipments, the plurality of U2U relay user equipments comprising the apparatus and one or more other U2U relay user equipments;
wherein the first data packet comprises at least one of: a system information block, a paging message, an acknowledgement for a small data transmission, a connection setup response, a connection release response, or path information comprising information associated with at least one of: the U2N user equipment or the U2U relay user equipment.

8. The apparatus according to claim 7, further being caused to:
establish a first unicast sidelink connection between the apparatus and a first neighboring user equipment, wherein the first unicast sidelink connection comprises one hop of a multi-hop connection established between the U2N user equipment and a remote user equipment via the plurality of U2U relay user equipments, the first neighboring user equipment comprising the U2N relay user equipment or one of the one or more other U2U relay user equipments;
establish a second unicast sidelink connection between the apparatus and a second neighboring user equipment, the second neighboring user equipment comprising the remote user equipment or one of the one or more other U2U relay user equipments, wherein the second unicast sidelink connection comprises another hop of the multi-hop connection;
receive the first data packet from the first neighboring user equipment or the second neighboring user equipment over a common connection;
wherein the common connection includes at least one of: a control channel, a common control channel, a pre-defined control channel, a common bearer, a common signaling radio bearer, or a pre-defined signaling radio bearer; and
wherein the common connection is used across at least the U2N user equipment and the plurality of U2U relay user equipments.

9. The apparatus according to any of claims 7-8, further being caused to:
receive the first data packet from the first neighboring user equipment or the second neighboring user equipment,
wherein a destination identifier in a control header of the first data packet is addressed to at least one of: the apparatus, the at least one of the one or more other U2U relay user equipments, the U2N relay user equipment, or the remote user equipment; and/or
transmit a second data packet to the first neighboring user equipment or the second neighboring user equipment,
wherein a source identifier in a control header of the second data packet identifies the apparatus; and/or a destination identifier in the control header of the second data packet is addressed to at least one of: the at least one of the one or more other U2U relay user equipments, the U2N relay user equipment, or the remote user equipment.

10. The apparatus according to any claims 8-9, further being caused to:
activate the common connection over the first unicast sidelink connection and the second unicast sidelink connection before receiving the first data packet;
receive the first data packet from the first neighboring user equipment or the second neighboring user equipment over the common connection, or from another user equipment using the common connection; and/or
transmit the second data packet to the first neighboring user equipment or the second neighboring user equipment over the common connection.

11. The apparatus according to any of claims 9-10, further being caused to:
determine, based on decoding the destination identifier in the control header of the first data packet, whether the first data packet is addressed to at least one other user equipment using the common connection; and
based on determining that the first data packet is addressed to the at least one other user equipment using the common connection,
transmit the first data packet to the second neighboring user equipment or the first neighboring user equipment over the common connection.

12. The apparatus according to any of claims 9-10, further being caused to:
determine, based on decoding the destination identifier in the control header of the first data packet, whether the first data packet is addressed to the apparatus; and
based on determining that the first data packet is addressed to the apparatus,
store a copy of the first data packet;
based on determining that the first data packet is addressed to only the apparatus,
terminate the first data packet.

13. The apparatus according to any of claims 9-12, wherein the second data packet comprises at least one of: a request for a system information block, a request for monitoring a paging message, a request for a small data transmission, a connection setup request, a connection release request, or path information comprising information associated with at least the apparatus.

14. The apparatus according to any of claims 8-13, further being caused to:
communicate with a radio access network node via the U2N relay user equipment over the first unicast sidelink connection or the common connection, wherein the first unicast sidelink connection comprises a hop towards to the U2N relay user equipment.

15. An apparatus comprising at least one processor, and at least one memory storing instructions that, when executed by the at least one processor, cause the apparatus at least to:
determine a configuration for a common connection to be used across at least a user-equipment-to-network, U2N, relay user equipment and a plurality of user-equipment-to-user-equipment, U2U, relay user equipments, wherein the plurality of U2U relay user equipments are configured to provide a multi-hop connection between the U2N relay user equipment and a remote user equipment via the plurality of U2U relay user equipments; and
transmit the configuration to the U2N relay user equipment,
wherein the common connection includes at least one of: a control channel, a common control channel, a pre-defined control channel, a common bearer, a common signaling radio bearer, or a pre-defined signaling radio bearer.
